# EUROPEAN PATENT APPLICATION

(11) **EP 3 040 533 A1**
(43) Date of publication of application: **06.07.2016**
(21) Application number: 16150455.0
(22) Date of filing: 13.04.2007
(51) Int. Cl.: F02B 27/02, F02M 35/10, F02M 35/16, F02M 35/024, F02D 9/12

(54) **VEHICLE**

(30) Priority: 14.04.2006 JP 2006111560; 20.09.2006 JP 2006253673
(62) Divisional of application: 07007628.6
(71) Applicant: Yamaha Hatsudoki Kabushiki Kaisha, Iwata-shi, Shizuoka 438-8501 (JP)
(72) Inventor: SUDOH, Takehiko, Iwata-shi, Shizuoka 438-8501 (JP); KOBAYASHI, Makoto, Iwata-shi, Shizuoka 438-8501 (JP)
(74) Representative: Grünecker Patent- und Rechtsanwälte PartG mbB

(57) **Abstract**

The present invention relates to a vehicle comprising: an engine having an intake port; a fixed funnel for introducing air to the intake port of the engine; a movable funnel movably disposed on an air supply side of the fixed funnel for introducing the air to the intake port of the engine in conjunction with the fixed funnel; a seal member disposed between the fixed funnel and the movable funnel; and an engagement part for engagement of the seal member with either one of the fixed funnel and the movable funnel to prevent the seal member from falling off.

## Description

The present invention relates to a vehicle, and more particularly to a vehicle having a funnel for introducing air to an intake port of an engine.

Conventionally, there is known an intake system having a funnel for introducing air to an intake port of an engine (for example, see Patent Document 1). Patent Document 1 discloses an intake system including a fixed intake pipe (funnel) for introducing air to an intake port of an engine and a movable intake pipe movably disposed on the air supply side of the fixed intake pipe. In this intake system, the movable intake pipe can be moved away from and brought into contact with the fixed intake pipe so as to change the length of the intake pipe.

Patent Document 1: JP-U-Hei 01-111136

However, because the structure disclosed in Patent Document 1 is not provided with any seal to block the gap between the movable intake pipe and the fixed intake pipe when the movable intake pipe is in contact with the fixed intake pipe, it is difficult to restrict air leakage through the gap between the movable intake pipe and the fixed intake pipe when the movable intake pipe is moved to the fixed intake pipe side. In this case, it is difficult to supply a desired amount of air to the intake port.

The present invention has been made to solve the foregoing problem, and therefore has an object to provide a vehicle in which air leakage through the gap between a movable funnel and a fixed funnel can be restricted.

This objective is solved in an inventive manner by a vehicle comprising an engine having an intake port, a fixed funnel for introducing air to the intake port of the engine, a movable funnel movably disposed on an air supply side of the fixed funnel for introducing the air to the intake port of the engine in conjunction with the fixed funnel, a seal member disposed between the fixed funnel and the movable funnel, and an engagement part for engagement of the seal member with either one of the fixed funnel and the movable funnel to prevent the seal member from falling off.

Preferably, the engagement part includes a first engagement portion formed in the either one of the fixed funnel and the movable funnel, and a second engagement portion formed in the seal member for engagement with the first engagement portion to prevent the seal member from falling off from the either one of the fixed funnel and the movable funnel.

Further, preferably the first engagement portion of the either one of the fixed funnel and the movable funnel includes a projection, and the second engagement portion of the seal member includes a recess for engagement with the projection.

Still further, preferably the first engagement portion of the either one of the fixed funnel and the movable funnel includes a recess, and the second engagement portion of the seal member includes a projection for engagement with the recess. Therein, the first engagement portion may be formed in the movable funnel.

Yet further still, preferably the first engagement portion includes a flange-like first projection formed on a side surface of the movable funnel, and the second engagement portion includes a first recess for receiving the first projection.

Preferably, the first engagement portion includes a boss-like second projection formed on a side surface of the movable funnel, and the second engagement portion includes a second recess for receiving the second projection.

Further, preferably the fixed funnel, the movable funnel and the seal member are formed to be cylindrical in shape, the second recess is formed to extend at a predetermined angle with respect to a radial direction of the seal member, and the boss-like second projection is formed to extend in a direction corresponding to the extending direction of the second recess. Therein, the second recess may be a through hole.

Still further, preferably the engine has a plurality of intake ports, each of the intake ports is provided with the fixed funnel and the movable funnel, a plurality of the movable funnels are formed integrally, and the boss-like second projection is formed to extend in a direction perpendicular to a direction in which the plurality of the movable funnels are disposed adjacently.

Yet further still, preferably the seal member is secured to either one of the fixed funnel and the movable funnel.

Preferably, the seal member is elastically deformable and includes a thick portion and a thin portion axially thinner than the thick portion. Therein, the second recess may be formed in the thick portion of the seal member.

Further, preferably the plurality of the movable funnels are formed integrally via a shaft part, the seal member is elastically deformable and includes a thick portion and a thin portion axially thinner than the thick portion, the thin portion of the seal member is formed as a recess, and at least a part of the shaft part of the movable funnels is disposed in the recess of the thin portion.

Still further, preferably the seal member includes a seal portion for contact with either one of the fixed funnel and the movable funnel from a different direction.

Yet further still, preferably the seal portion includes a first seal portion extending in a direction perpendicular to an axial direction of the seal member, and a second seal portion formed to extend in the axial direction of the seal member.

In the following, the present invention is explained in greater detail with respect to several embodiments thereof in conjunction with the accompanying drawings, wherein:
- FIG. 1: is a side view showing the entire structure of a motorcycle according to a first embodiment,
- FIG. 2: is a plan view of the surrounding area of funnels of the motorcycle according to the first embodiment shown in FIG. 1,
- FIG. 3: is a side view of the surrounding area of the funnels of the motorcycle according to the first embodiment shown in FIG. 1,
- FIG. 4: is a cross sectional view for explaining the attachment structure of an air filter to a cleaner box in the motorcycle according to the first embodiment shown in FIG. 1,
- FIG. 5: is a side view for explaining the structure of the cleaner box of the motorcycle according to the embodiment shown in FIG. 1,
- FIG. 6: is a side view for explaining the attachment structure of a funnel moving mechanism to the cleaner box in the motorcycle according to the embodiment shown in FIG. 1.
- FIG. 7: is a rear view of the surrounding area of the funnels of the motorcycle according to the first embodiment shown in FIG. 1,
- FIG. 8: is a perspective view with the movable funnels in their spaced positions in the motorcycle according to the first embodiment shown in FIG. 1,
- FIG. 9: is a side view of the surrounding area of a funnel moving mechanism with the movable funnels in their spaced positions in the motorcycle according to the first embodiment shown in FIG. 1,
- FIG. 10: is a side view of the surrounding area of a parallel link with the movable funnels in their spaced positions in the motorcycle according to the first embodiment shown in FIG. 1,
- FIG. 11: is a perspective view with the movable funnels in their contacting positions in the motorcycle according to the first embodiment shown in FIG. 1,
- FIG. 12: is a side view of the surrounding area of the funnel moving mechanism with the movable funnels in their contacting positions in the motorcycle according to the first embodiment shown in FIG. 1,
- FIG. 13: is a side view of the surrounding area of the parallel link with the movable funnels in their contacting positions in the motorcycle according to the first embodiment shown in FIG. 1,
- FIG. 14: is a plan view for explaining the detailed structure of the surrounding area of the funnels of the motorcycle according to the first embodiment shown in FIG. 1,
- FIG. 15: is a rear view of fixed funnels of the motorcycle according to the first embodiment shown in FIG. 1,
- FIG. 16: is a cross sectional view for explaining the attachment structure of the fixed funnels shown in FIG. 15 to a throttle body,
- FIG. 17: is a cross sectional view for explaining the attachment structure of the fixed funnels shown in FIG. 15 to the throttle body,
- FIG. 18: is an enlarged cross sectional view of the surrounding area of a guide member of the motorcycle according to the first embodiment shown in FIG. 1,
- FIG. 19: is a rear view of the movable funnels of the motorcycle according to the first embodiment shown in FIG. 1,
- FIG. 20: is a perspective view for explaining the structure of a seal member of the motorcycle according to the first embodiment shown in FIG. 1,
- FIG. 21: is a plan view for explaining the structure of the seal member of the motorcycle according to the first embodiment shown in FIG. 1,
- FIG. 22: is a perspective view for explaining the structure of the movable funnels of the motorcycle according to the first embodiment shown in FIG. 1,
- FIG. 23: is a cross sectional view for explaining the detailed structure of the seal member of the motorcycle according to the first embodiment shown in FIG. 1,
- FIG. 24: is a cross sectional view for explaining the detailed structure of the seal member of the motorcycle according to the first embodiment shown in FIG. 1,
- FIG. 25: is a perspective view for explaining the structure of a seal member of a motorcycle according to a second embodiment,
- FIG. 26: is a plan view for explaining the structure of the seal member shown in FIG. 25,
- FIG. 27: is a perspective view for explaining the structure of movable funnels of the motorcycle according to the second embodiment,
- FIG. 28: is a cross sectional view for explaining the detailed structure of the seal member shown in FIG. 25,
- FIG. 29: is a side view for explaining the detailed structure of the seal member shown in FIG. 25,

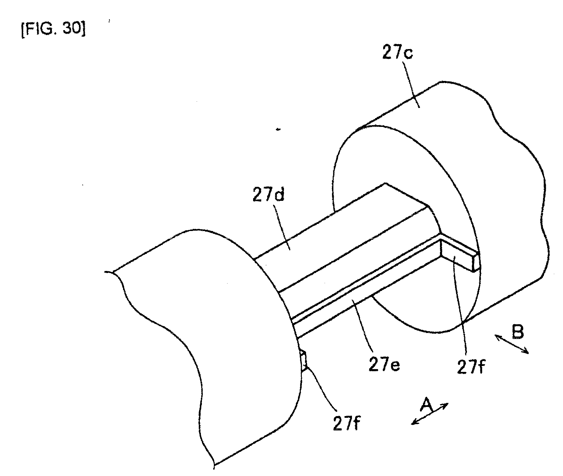

- FIG. 30: is a perspective view for explaining the structure of a support shaft for the movable funnels shown in FIG. 19,

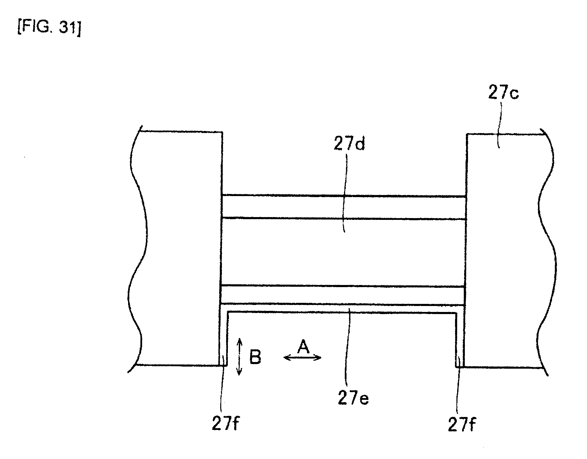

- FIG. 31: is a plan view for explaining the structure of the support shaft for the movable funnels shown in FIG. 19,
- FIG. 32: is a side view of the surrounding area of a split bushing for use in the motorcycle according to the embodiment shown in FIG. 1,
- FIG. 33: is a cross sectional view of the surrounding area of the split bushing for use in the motorcycle according to the embodiment shown in FIG. 1,
- FIG. 34: is a perspective view of the split bushing for use in the motorcycle according to the embodiment shown in FIG. 1,
- FIG. 35: is a side view of the surrounding area of the split bushing for use in the motorcycle according to the embodiment shown in FIG. 1,
- FIG. 36: is a side view of the surrounding area of the split bushing for use in the motorcycle according to the embodiment shown in FIG. 1,
- FIG. 37: is a cross sectional view for explaining the detailed structure of a seal member of the motorcycle according to the embodiment shown in FIG. 1,
- FIG. 38: is a cross sectional view for explaining the detailed structure of the seal member of the motorcycle according to the embodiment shown in FIG. 1,
- FIG. 39: is a side view of the surrounding area of the parallel link for use in the motorcycle according to the embodiment shown in FIG. 1,
- FIG. 40: is a perspective view for explaining the structure of a fitting part of the parallel link shown in FIG. 39,
- FIG. 41: is a side view of the surrounding area of the parallel link for use in the motorcycle according to the embodiment shown in FIG. 1,
- FIG. 42: is a side view of the surrounding area of the parallel link for use in the motorcycle according to the embodiment shown in FIG. 1,
- FIG. 43: is a cross sectional view for explaining the structure of a movable member of the motorcycle according to the embodiment shown in FIG. 1, and
- FIG. 44: is a cross sectional view for explaining the structure of the movable member of the motorcycle according to the embodiment shown in FIG. 1.

### Description of Reference Numerals and Symbols:

14: engine
17a: intake port
26: fixed funnel
27, 77: movable funnel
27f, 77f: projection (first engagement portion, second projection)
27g, 77g: projection (first engagement portion, first projection)
35, 85: seal member
35a, 85a: engagement hole (second engagement portion, second recess)
35b, 85b: recess (second engagement portion, first recess)
35c, 85c: first seal portion
35d, 85d: second seal portion
77b: support shaft (shaft part)
77h: recess
85e: thick portion
85f: thin portion
85g: projection
α: predetermined angle

Description will hereinafter be made of embodiments with reference to the accompanying drawings.

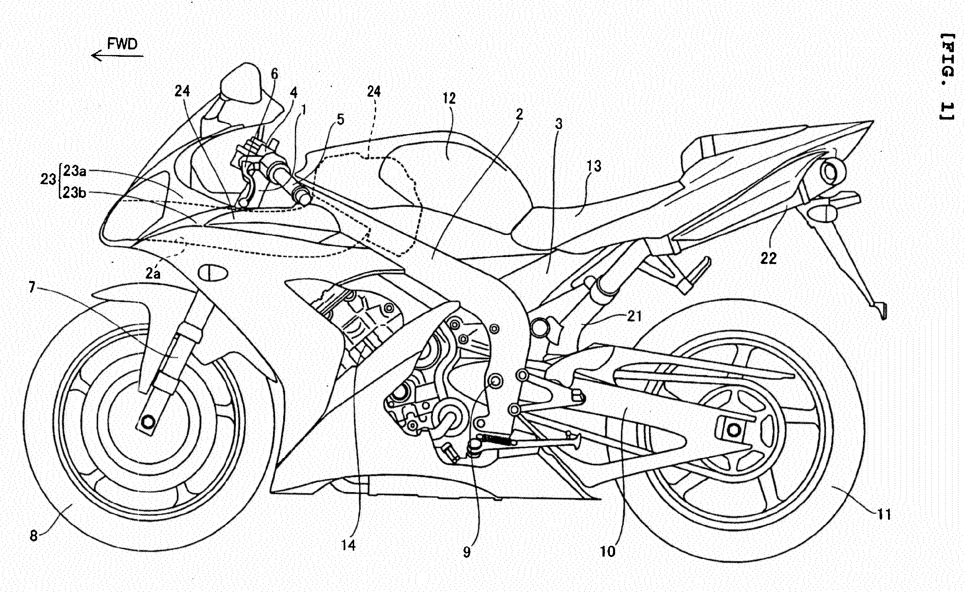

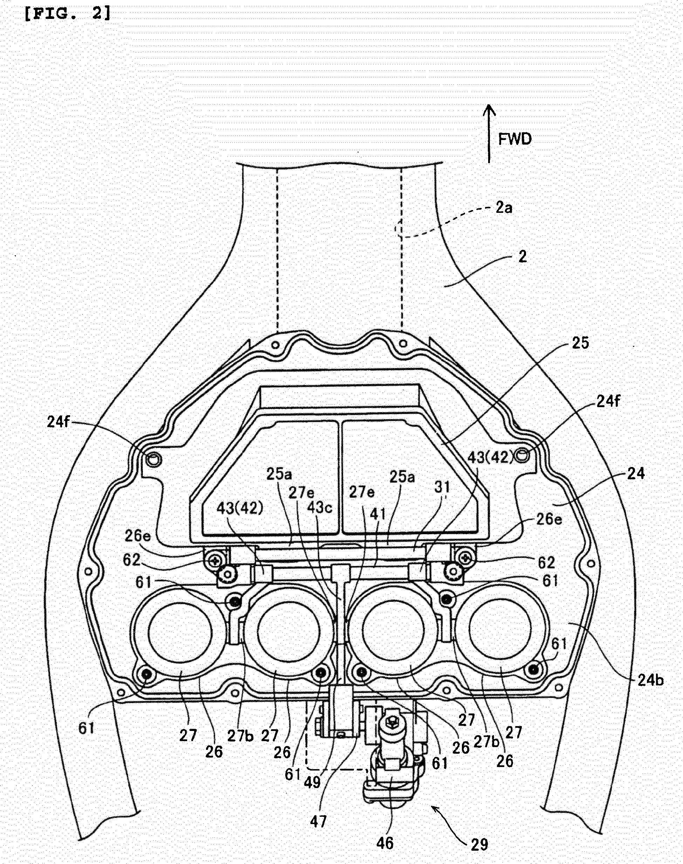

FIG. 1 is a side view showing the entire structure of a motorcycle according to a first embodiment. FIGs. 2 to 22 illustrate the detailed structure of a funnel and a seal member of the motorcycle according to the first embodiment shown in FIG. 1. In the description of the first embodiment, a motorcycle is taken as an example of the vehicle of the present teaching. In the drawings, "FWD" indicates the forward or running direction of the motorcycle. Now, the structure of the motorcycle according to the first embodiment is described with reference to FIGs. 1 to 22.

As shown in FIG. 1, the motorcycle of the first embodiment has a head pipe 1 and a main frame 2 with its front end connected to the head pipe 1. As shown in FIG. 2, the main frame 2 is branched to extend leftward and rightward with respect to the forward direction of the vehicle body (FWD direction indicated by the arrow). The main frame 2 is provided with an air intake passage 2a for introducing air into a cleaner box 24 to be described later. As shown in FIG. 1, the main frame 2 is formed to extend rearward and downward. A seat rail 3 extending rearward and upward is connected to the main frame 2. A steering mechanism 4 is attached to the head pipe 1 for rotational movement. Handlebars 5 are attached to an upper part of the steering mechanism 4. A clutch lever 6 is attached to the handlebars 5. A front fork 7 is attached to a lower part of the steering mechanism 4. A front wheel 8 is rotatably mounted at the lower end of the front fork 7.

The front end of a swing arm 10 is attached to the rear end of the main frame 2 via a pivot shaft 9. A rear wheel 11 is rotatably mounted at the rear end of the swing arm 10. A fuel tank 12 is disposed above the main frame 2, and a seat 13 is disposed above the seat rail 3. An engine 14 is mounted below the main frame 2.

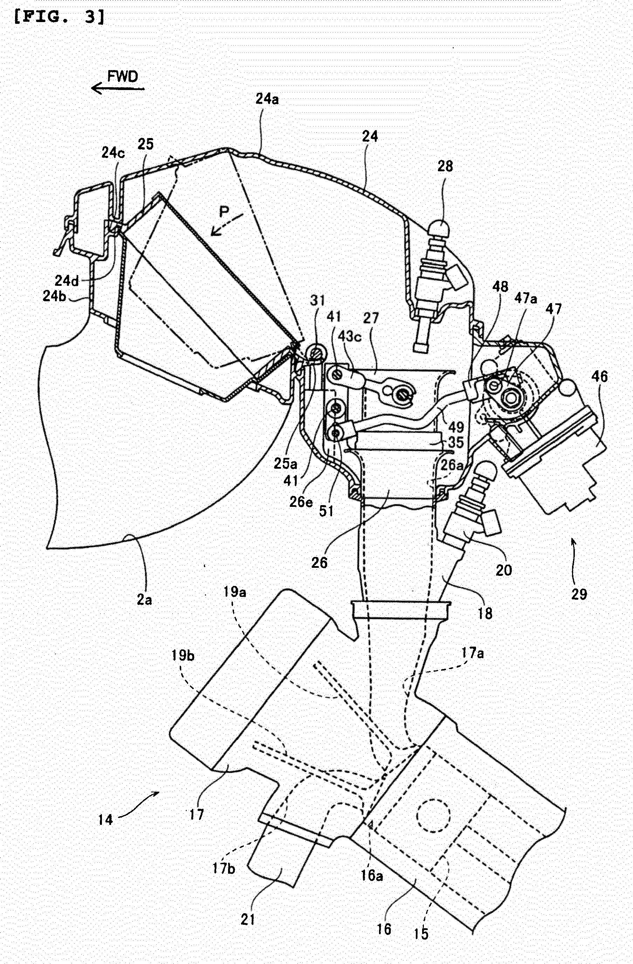

As shown in FIG. 3, the engine 14 includes a piston 15, a cylinder 16, a cylinder head 17 and a throttle body 18. The piston 15 is fitted in the cylinder 16, and the cylinder head 17 is disposed to plug one opening of the cylinder 16. The cylinder head 17 is formed with an intake port 17a and an exhaust port 17b. The intake port 17a is provided to supply a mixture of air and fuel to a combustion chamber 16a of the cylinder 16. The exhaust port 17b is provided to exhaust a residual gas from the combustion chamber 16a of the cylinder 16 after combustion. The intake port 17a and the exhaust port 17b are provided with an intake valve 19a and an exhaust valve 19b, respectively. The throttle body 18 is attached to an opening of the intake port 17a. An injector 20 for injecting fuel into the intake port 17a is attached to the throttle body 18. An exhaust pipe 21 is attached to an opening of the exhaust port 17b, and a muffler 22 (see FIG. 1) is connected to the exhaust pipe 21. Although only one cylinder 16 is shown in FIG. 3, four cylinders 16 are actually provided at predetermined intervals in the width direction of the vehicle body. That is, the engine 14 of the first embodiment is a four-cylinder type.

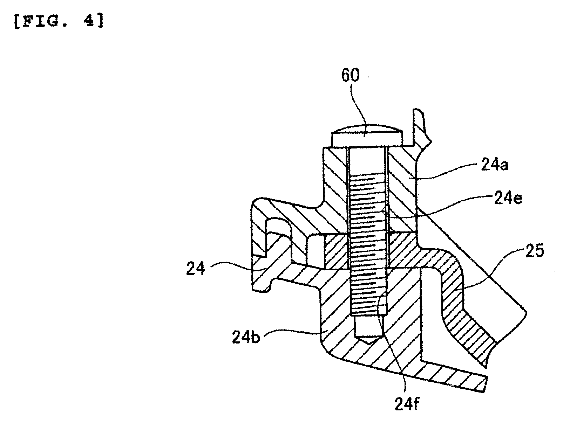

As shown in FIG. 1, the front side of the vehicle body is covered by a front cowl 23, which includes an upper cowl 23a and a lower cowl 23b. As shown in FIGs. 1 and 2, a cleaner box 24 for receiving air supplied from the air intake passage 2a of the main frame 2 is disposed between the left and right branches of the main frame 2. As shown in FIGs. 2 and 3, an air filter 25 is disposed in the cleaner box 24 to purify air supplied from the air intake passage 2a of the main frame 2. As shown in FIG. 3, the air filter 25 is secured by being interposed between an upper box part 24a and a lower box part 24b of the cleaner box 24. Specifically, the front part of the air filter 25 is secured by being interposed by a pressing part 24c of the upper box part 24a and a support part 24d of the lower box part 24b. As shown in FIGs. 2 and 4, the longitudinal center of the air filter 25 is screwed with a screw 60 (see FIG. 4) to a screw hole 24e (see FIG. 4) of the upper box part 24a and a screw hole 24f of the lower box part 24b. As shown in FIG. 3, a contacting portion 25a at the rear part of the air filter 25 is secured by being interposed between a guide member 31 to be described later and the lower box part 24b.

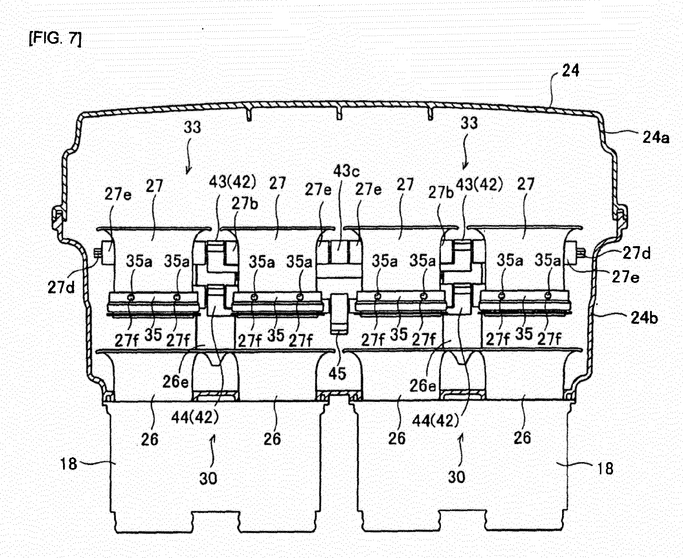

In the first embodiment, as shown in FIGs. 3 and 7, a resin fixed funnel 26 and a resin movable funnel 27 are provided in the cleaner box 24. As shown in FIG. 3, an injector 28 is attached to an upper part of the cleaner box 24. The injector 28 is provided to inject fuel into the intake port 17a, together with the injector 20, when the engine 14 is rotating at a high speed. The injector 28 is disposed above the movable funnel 27. A funnel moving mechanism 29 is screwed to a rear part of the cleaner box 24 from outside.

One fixed funnel 26 and one movable funnel 27 are provided for each cylinder 16 of the engine 14. The fixed funnel 26 is secured to the cleaner box 24, and has a function of introducing purified air in the cleaner box 24 to the intake port 17a. The movable funnel 27 is disposed on the air supply side of the fixed funnel 26, and has a function of introducing purified air in the cleaner box 24 to the intake port 17a, in conjunction with the fixed funnel 26.

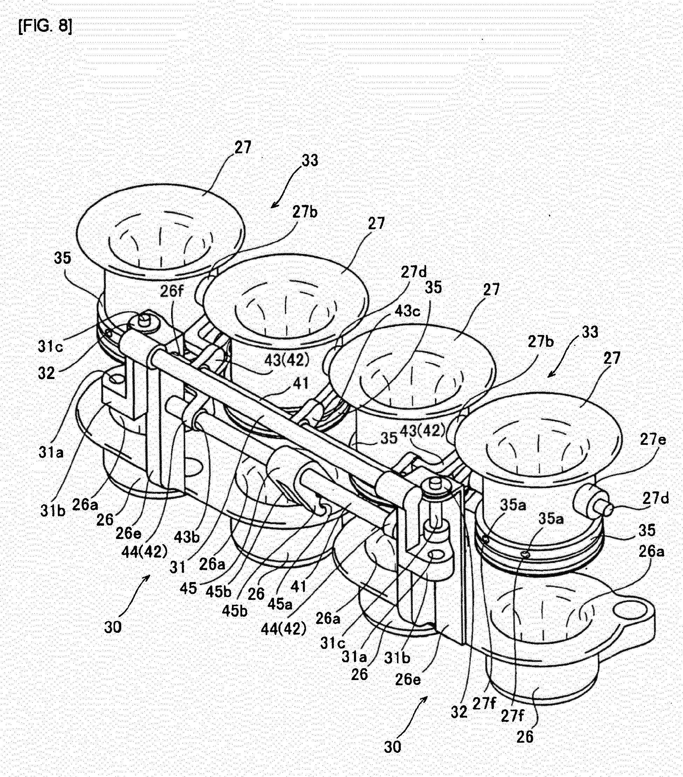

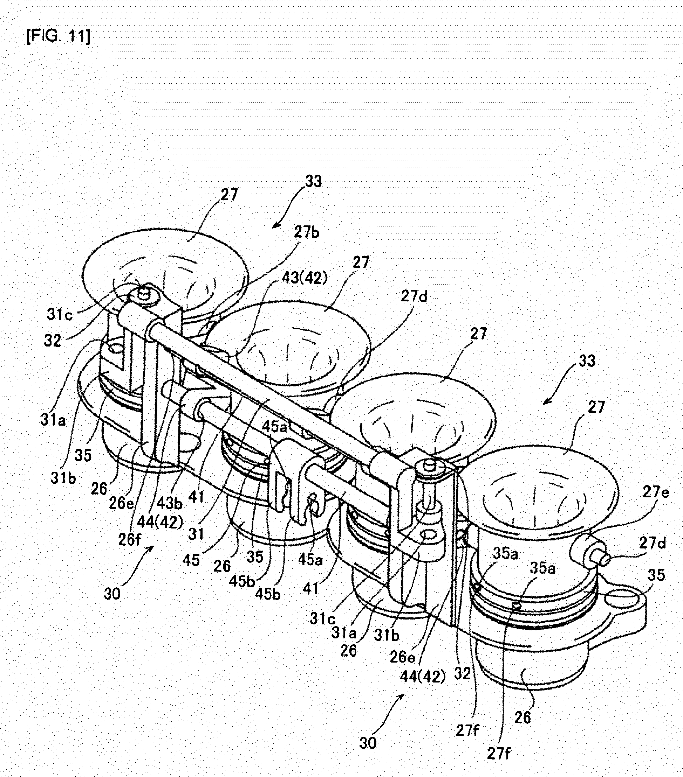

As shown in FIGs. 8 to 13, the movable funnel 27 is translatable between the spaced position (shown in FIGs. 8 to 10) at which its opening 27a on the fixed funnel 26 side is spaced apart from an opening 26a of the fixed funnel 26 on the air supply side, and the contacting position (shown in FIGs. 11 to 13) at which the opening 27a of the movable funnel 27 is in contact with the opening 26a of the fixed funnel 26. Here, as shown in FIG. 3, when the movable funnel 27 is in the spaced position (shown in FIGs. 8 to 10), the intake pipe extending from the cleaner box 24 to the cylinder 16 is made up of the fixed funnel 26, the throttle body 18 and the intake port 17a. On the other hand, when the movable funnel 27 is in the contacting position (shown in FIGs. 11 to 13), the intake pipe extending from the cleaner box 24 to the cylinder 16 is made up of the movable funnel 27, the fixed funnel 26, the throttle body 18 and the intake port 17a.

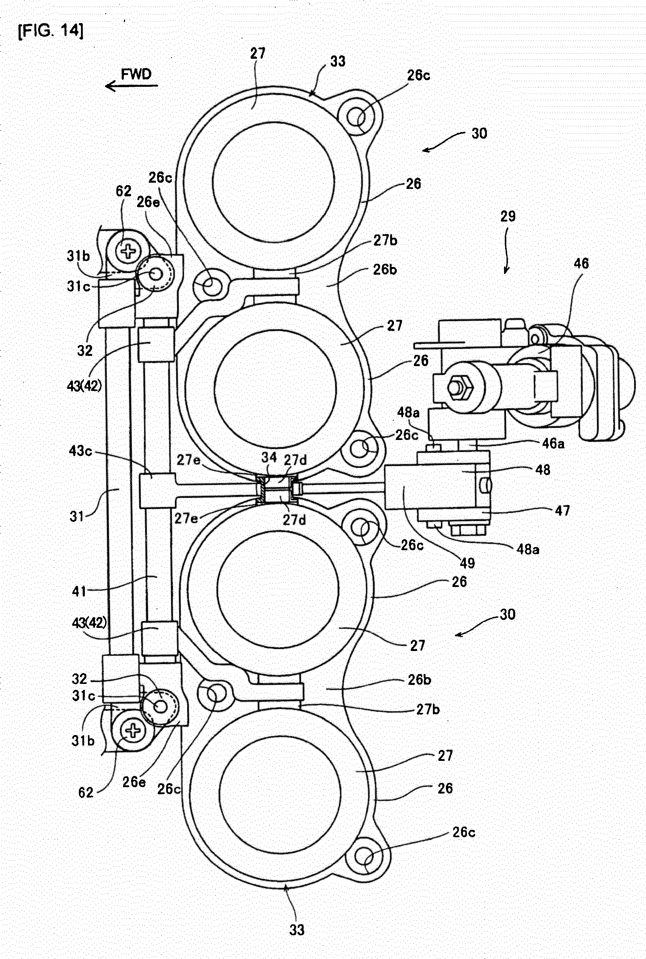

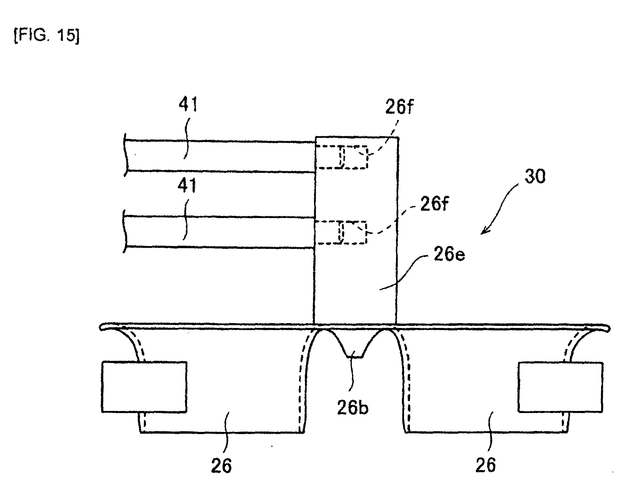

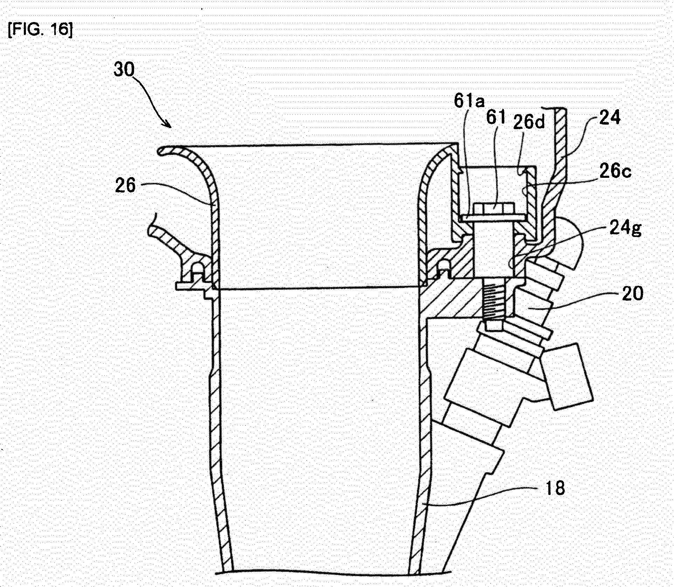

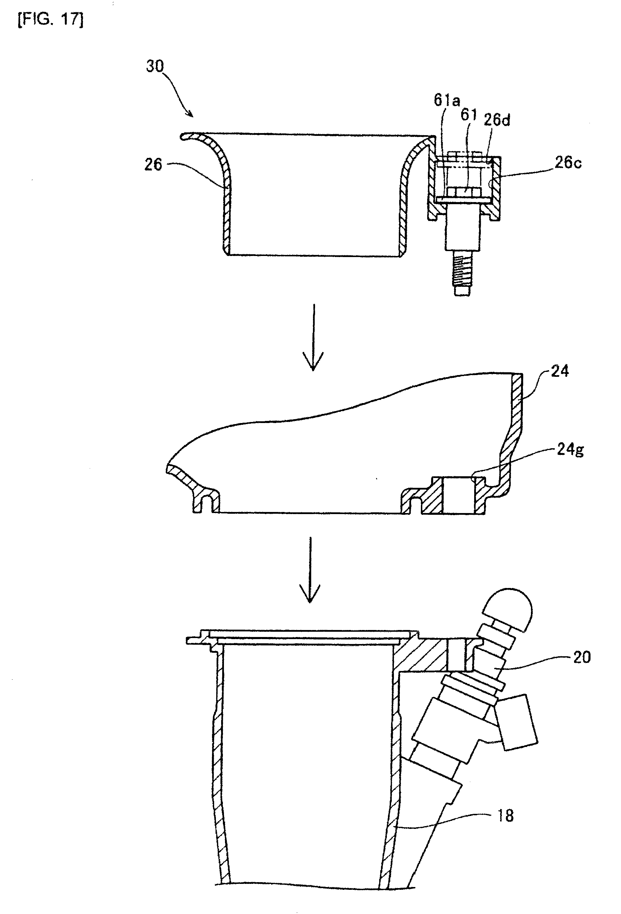

As shown in FIGs. 14 and 15, two adjacent fixed funnels 26 are integrated together via a connection 26b. That is, the first embodiment includes two parts 30, each integrating two adjacent fixed funnels 26 together. As shown in FIG. 14, each part 30, integrating two fixed funnels 26 together, has three screw insertion holes 26c for insertion of screws 61 (see FIG. 16). As shown in FIG. 16, the fixed funnels 26 (part 30) are attached to the cleaner box 24 and the throttle body 18 with the screws 61 inserted into the screw insertion holes 26c. The cleaner box 24 is also formed with screw insertion holes 24g for insertion of the screws 61. An engagement portion 26d is formed on the inner surface of the screw insertion hole 26c of the fixed funnels 26 (part 30). With this construction, as shown in FIG. 17, a head 61 a of the screw 61 can be engaged with the engagement part 26d before the screw 61 is attached to the throttle body 18. Thus, the screw 61 can be prevented from slipping upward out of the screw insertion hole 26c. As shown FIGs. 14 and 15, a support column 26e is formed integrally with the part 30 integrating two fixed funnels 26 together. As shown in FIG. 15, the support column 26e is formed with a pair of rotary shaft support holes 26f for supporting ends of rotary shafts 41 to be described later for rotational movement.

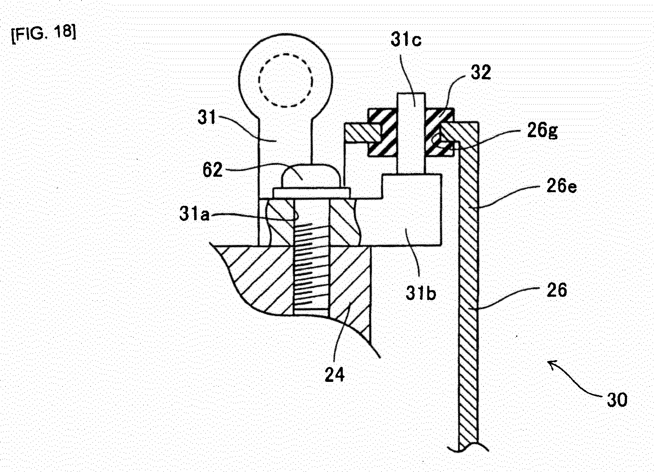

As shown in FIG. 8, a guide member 31 is attached to the support columns 26e of the two parts 30. A fixation part 31b having a fixation hole 31a is provided at both ends of the guide member 31. As shown in FIG. 14, the guide member 31 is screwed at the fixation holes 31a (see FIG. 8) to the cleaner box 24 (see FIG. 2) with screws 62. As shown in FIGs. 8 and 14, the fixation parts 31 b are each formed with a cylindrical portion 31c projecting upward. As shown in FIG. 18, the cylindrical portions 31c formed at both ends of the guide member 31 are respectively inserted into insertion holes 26g of the support columns 26e of the part 30 via rubber members 32. That is, the guide member 31 has a function of regulating the attachment positions of the two parts 30. With this construction, changes in the interval between the two parts 30 in the axial direction of the guide member 31 can be restricted.

As shown in FIG. 3, the guide member 31 functions as a guide when attaching the air filter 25 to the cleaner box 24. Specifically, the air filter 25 can be attached to the cleaner box 24 by holding the air filter 25 with the contacting portion 25a at the rear part thereof in contact with the guide member 31 and then rotating the air filter 25 about the guide member 31 in P direction of FIG. 3. The guide member 31 also has a function of preventing the rear part of the air flter 25 from coming upward out of position when the air filter 25 is attached to the cleaner box 24.

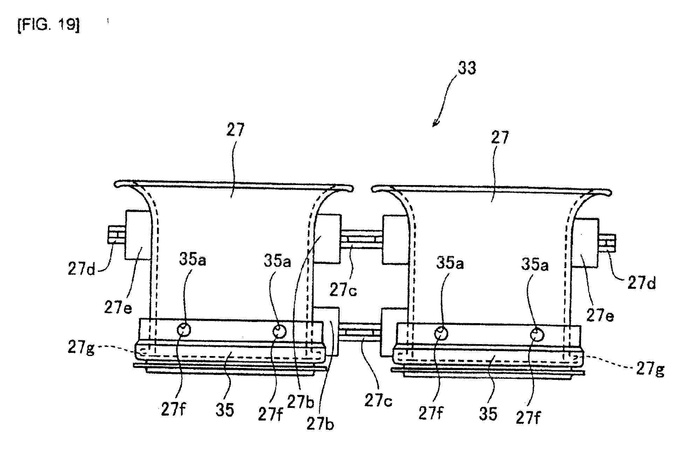

In the first embodiment, as shown in FIGs. 14 and 19, two adjacent movable funnels 27 are integrated together via a pair of support shafts 27b (see FIG. 19). That is, the first embodiment includes two parts 33, each integrating two adjacent movable funnels 27 together. The support shaft 27b is disposed between the two movable funnels 27 of the part 33. The support shaft 27b is supported by a parallel link 42 to be described later so that the movable funnels 27 (part 33) are translatable. As shown in FIG. 19, the support shaft 27b has a small diameter portion 27c.

A support shaft 27e having a small diameter portion 27d is provided on outer sides of the part 33 integrating two adjacent movable funnels 27 together. As shown in FIG. 14, the two parts 33, each integrating two movable funnels 27 together, are disposed such that their respective end surfaces of the small diameter portions 27d of the support shafts 27e are opposed to each other.

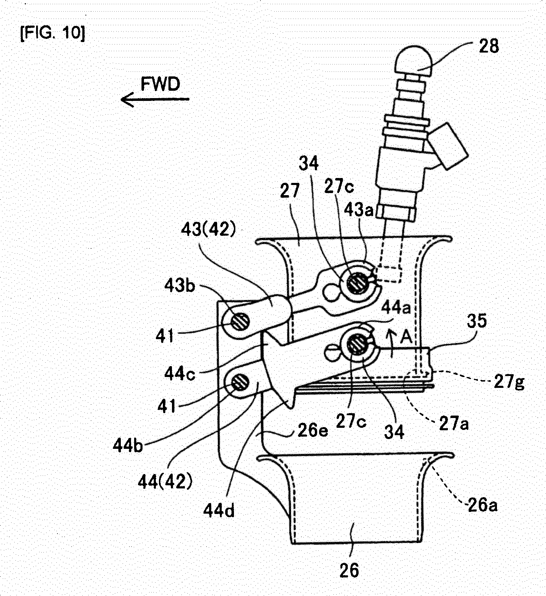

As shown in FIG. 10, a split bush 34 is mounted on the small diameter portion 27c of the support shaft 27b (see FIG. 14) of the movable funnels 27 (part 33). The split bush 34 has a function of allowing rotational movement of the parallel link 42 to be described later relative to the support shaft 27b.

As shown in FIG. 14, such a split bush 34 as described above is also mounted on the small diameter portions 27d of the support shafts 27e between the two parts 33, each integrating two movable funnels 27 together. Between the two parts 33 each integrating two movable funnels 27 together, only one split bush 34 is mounted in such a manner as to cover the two small diameter portions 27d of the support shafts 27e.

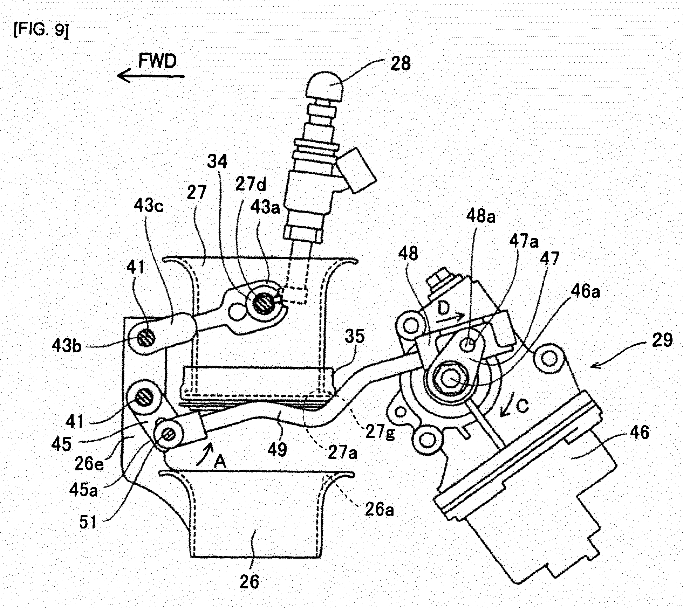

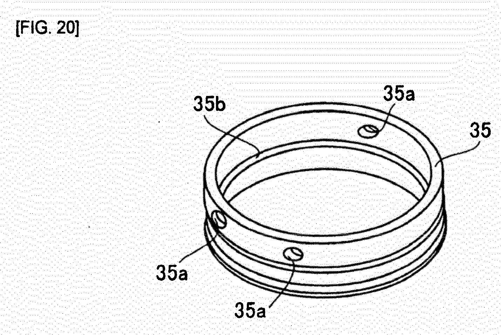

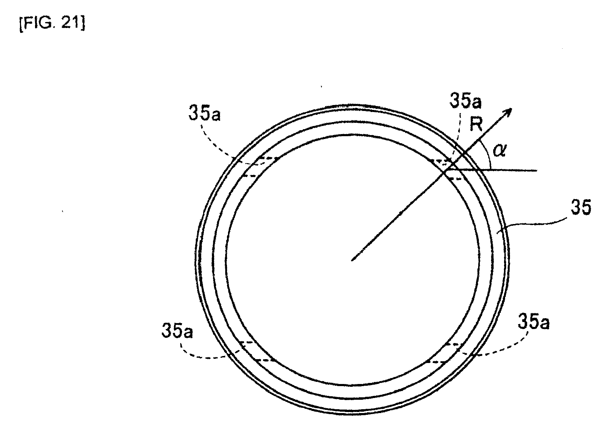

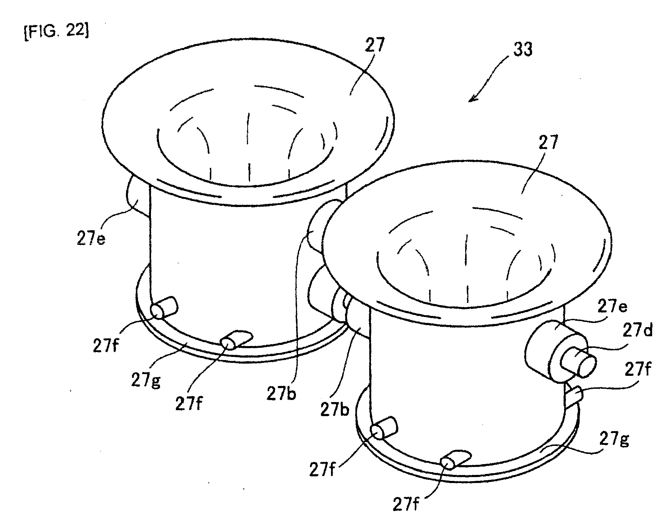

In the first embodiment, as shown in FIGs. 7 and 9, a rubber seal member 35 is mounted (secured) at the lower end of the movable funnel 27, which is on the fixed funnel 26 side. As shown in FIGs. 20 and 21, the seal member 35 is formed with four engagement holes 35a as through holes. Four cylindrical projections 27f (see FIG. 22) of the movable funnel 27 are in engagement with the engagement holes 35a. The engagement hole 35a is an example of the "second engagement portion" and the "second recess" of the present teaching. The projection 27f is an example of the "first engagement portion" and the "second projection" of the present teaching. As shown in FIG. 21, the four engagement holes 35a of the seal member 35 are each formed to extend at a predetermined angle (α° = approximately 45°) with respect to a radial direction of the seal member 35 (R direction indicated by the arrow). As shown in FIG. 22, the four projections 27f of the movable funnel 27 are also each formed to extend at a predetermined angle (approximately 45°) with respect to the radial direction of the movable funnel 27 (seal member 35), as with the four engagement holes 35a. The four projections 27f of the movable funnel 27 extend in a direction perpendicular to a direction in which two movable funnels 27 are disposed adjacently.

In the first embodiment, as shown in FIG. 20, the seal member 35 is formed with a recess 35b on its inner peripheral surface. A flange-like projection 27g (see FIG. 22) formed at the bottom of the movable funnel 27 is in engagement with the recess 35b. The recess 35b is an example of the "second engagement portion" and the "first recess" of the present teaching. The projection 27g is an example of the "first engagement portion" and the "first projection" of the present teaching.

That is, in the first embodiment, the seal member 35 can be prevented from slipping off (falling off) downward from the lower end of the movable funnel 27 by engagement of the engagement holes 35a with the projections 27f and of the recess 35b with the projection 27g.

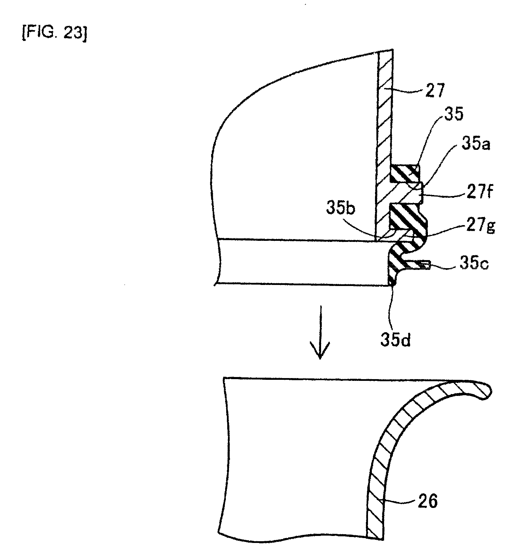

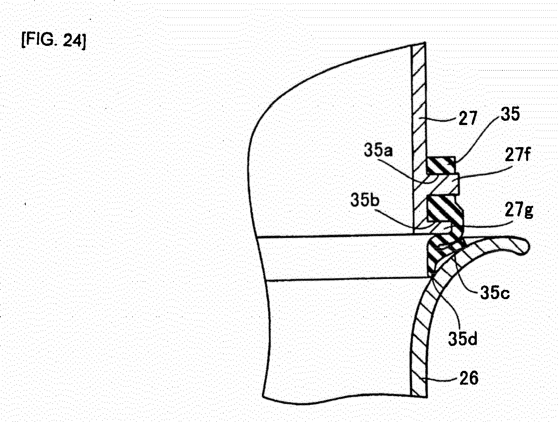

In the first embodiment, as shown in FIG. 23, the seal member 35 is formed with a first seal portion 35c extending laterally (radially (perpendicularly with respect to its axis) and a tubular second seal portion 35d extending downward (axially). When the movable funnel 27 translates from the spaced position (shown in FIG. 23) to the contacting position (shown in FIG. 24), the first seal portion 35c comes into contact with the fixed funnel 26 to block the gap between the movable funnel 27 and the fixed funnel 26. Also, the first seal portion 35c is elastically deformed upward so that the second seal portion 35d also comes into contact with the fixed funnel 26 to block the gap between the movable funnel 27 and the fixed funnel 26. That is, the seal member 35 has a double seal structure.

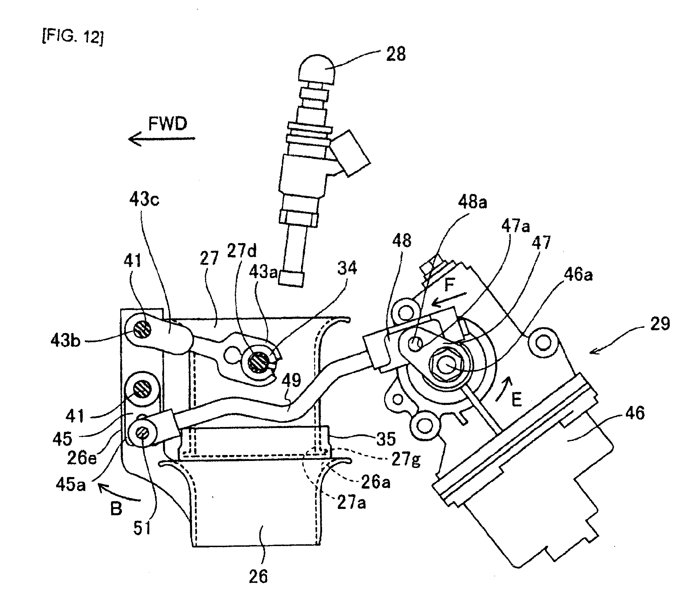

In the first embodiment, as shown in FIGs. 9 and 12, the funnel moving mechanism 29 uses a parallel link 42 to be described later to translate the movable funnel 27 between the spaced position (shown in FIGs. 8 and 9) and the contacting position (shown in FIGs. 11 and 12).

In a specific structure of the funnel moving mechanism 29, as shown in FIGs. 8 and 14, an end of the rotary shaft 41 is rotatably supported by the rotary shaft support hole 26f (see FIG. 15) of the support column 26e provided to the fixed funnels 26 (part 30).

As shown in FIG. 14, a parallel link 42 is attached to the one and the other ends of the rotary shaft 41 so as to move rotationally together therewith. As shown in FIGs. 8 and 10, the parallel link 42 includes an upper link lever 43 attached to the upper rotary shaft 41 for rotational movement thereabout and a lower link lever 44 attached to the lower rotary shaft 41 for rotational movement thereabout.

As shown in FIG. 9, the upper link lever 43 has a fitting part 43a and a rotary shaft insertion hole 43b. As shown in FIGs. 8 and 10, the fitting part 43a of the upper link lever 43 receives the upper support shaft 27b (small diameter portion 27c) of the movable funnel 27 via the split bush 34. With this construction, the upper link lever 43 is rotationally movable relative to the upper support shaft 27b.

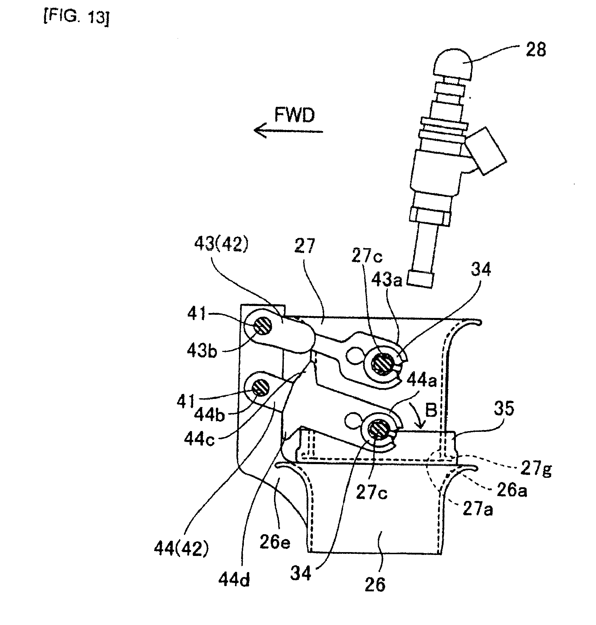

As shown in FIGs. 10 and 13, the upper rotary shaft 41 is inserted into the rotary shaft insertion hole 43b of the upper link lever 43 so that the upper link lever 43 moves rotationally together with the upper rotary shaft 41. As shown in FIG. 14, a link lever 43c is disposed between the parts 33 each integrating two movable funnels 27. The link lever 43c has a fitting part 43a (see FIGs. 9 and 12) and a rotary shaft insertion hole 43b similar to those of the upper link lever 43.

As shown in FIG. 10, the lower link lever 44 has a fitting part 44a, a rotary shaft insertion hole 44b and two stoppers 44c and 44d. The fitting part 44a of the lower link lever 44 receives the lower support shaft 27b (small diameter portion 27c) of the movable funnel 27 via the split bush 34. With this construction, the lower link lever 44 is rotationally movable relative to the lower support shaft 27b. The lower rotary shaft 41 is inserted into the rotary shaft insertion hole 44b of the lower link lever 44 so that the lower link lever 44 rotates together with the lower rotary shaft 41. As shown in FIG. 10, the stopper 44c of the lower link lever 44 has a function of regulating rotational movement of the lower link lever 44 in A direction by coming into contact with the support column 26e of the fixed funnel 26 when the lower link lever 44 has moved rotationally by a predetermined amount in A direction (when the movable funnel 27 has reached the spaced position). Also, as shown in FIG. 13, the stopper 44d of the lower link lever 44 has a function of regulating rotational movement of the lower link lever 44 in B direction by coming into contact with the support column 26e of the fixed funnel 26 when the lower link lever 44 has moved rotationally by a predetermined amount in B direction (when the movable funnel 27 has reached the contacting position).

As shown in FIG. 11, the lower rotary shaft 41 is provided with a support part 45 for rotational movement together therewith. The support part 45 is made up of a pair of holding pieces 45b each formed with a cutout 45a.

With the support part 45 and the parallel link 42 constructed as described above, as shown in FIGs. 9 and 10, when the support part 45 (see FIG. 9) is rotationally moved in A direction to rotationally move the parallel link 42 (see FIG. 10) in A direction, the movable funnel 27 is translated away from the fixed funnel 26. Also, as shown in FIGs. 12 and 13, when the support part 45 (see FIG. 12) is rotationally moved in B direction to rotationally move the parallel link 42 (see FIG. 13) in B direction, the movable funnel 27 is translated closer to the fixed funnel 26. Here, as shown in FIGs. 10 and 13, the amount of rotational movement of the parallel link 42 is adjusted such that the position of the opening end of the movable funnel 27 on the side of the opening 26a of the fixed funnel 26 is substantially the same as viewed in the opening direction of the fixed funnel 26 between when the movable funnel 27 is in the spaced position (shown in FIG. 10) and when it is in the contacting position (shown in FIG. 13). With this construction, even when the opening 27a of the movable funnel 27 is spaced apart from the opening 26a of the fixed funnel 26 while the engine 14 is rotating at a high speed, air can flow linearly through the movable funnel 27 into the fixed funnel 26 and hence an increase in air flow resistance can be restricted. As a result, a decrease in air intake efficiency can be restricted while the engine 14 is rotating at a high speed (when the movable funnel 27 is spaced apart from the fixed funnel 26).

As shown in FIG. 14, the parallel link 42, which includes the upper link lever 43 (see FIG. 8) and the lower link lever 44, is moved rotationally by the driving force of a motor 46 disposed outside the cleaner box 24 (see FIG. 3).

Specifically, the motor 46 is disposed on the rear side of the movable funnel 27 in the running direction of the vehicle (FWD direction indicated by the arrow). As shown in FIG. 9, one end of a rotary lever 47 is attached to an output shaft 46a of the motor 46. The other end of the rotary lever 47 is formed with an insertion hole 47a.

The rotary lever 47 is disposed inside the cleaner box 24. A projection 48a provided on both sides of a movable member 48 is attached to the insertion hole 47a of the rotary lever 47 so as to be pivotable relative to the insertion hole 47a. One end of a movable shaft 49 is disposed inside the movable member 48. Only one movable shaft 49 is provided.

As shown in FIG. 14, the movable shaft 49 is disposed between the two parts 33 (movable funnels 27). As shown in FIG. 9, a support shaft 51 is provided at the other end of the movable shaft 49. The cutout 45a of the support part 45, which moves rotationally together with the rotary shaft 41, is in engagement with the support shaft 51.

When the rotary lever 47 is rotationally moved in C direction (as shown in FIG. 9) by the driving force of the motor 46, the movable member 48 moves in D direction, which in turn rotationally moves the parallel link 42 in A direction.

On the other hand, when the rotary lever 47 is rotationally moved in E direction by the driving force of the motor 46 as shown in FIG. 12, the movable member 48 moves in F direction, which in turn rotationally moves the parallel link 42 in B direction.

Now, with reference to FIGs. 3, 9 and 12, description will be made of how the length of the intake pipe is changed between when the engine 14 is rotating at a high speed and when it is rotating at a low speed.

When the engine 14 shown in FIG. 3 is rotating at a high speed, the intake pipe is shortened so that a pulsation effect can be easily obtained. That is, the movable funnel 27 is translated to its spaced position when the engine 14 is rotating at a high speed. By utilizing the pulsation effect, the intake efficiency can be improved by adjusting the length of the intake pipe such that high-pressure pulses come closer to the vicinity of the intake valve.

Specifically, first of all, as shown in FIG. 9, the rotary lever 47 is rotationally moved in C direction by the motor 46 of the funnel moving mechanism 29 to move the movable member 48 in D direction. This moves the movable shaft 49 in D direction, which in turn rotationally moves the parallel link 42 (see FIG. 10) in A direction. After that, the parallel link 42 is kept rotationally moving in A direction until the stopper 44c of the lower link lever 44 comes into contact with the support column 26e as shown in FIG. 10.

This causes the movable funnel 27 to be moved to the spaced position with the opening end of the opening 27a of the movable funnel 27 kept in parallel to the opening end of the opening 26a of the fixed funnel 26. As a result, when the engine 14 (see FIG. 3) is rotating at a low speed, the intake pipe is made up of the fixed funnel 26, the throttle body 18 (see FIG. 3) and the intake port 17a (see FIG. 3) and hence can be shortened. Here, when the intake pipe is shortened when the engine 14 shown in FIG. 3 is rotating at a high speed, high-pressure pulses can easily reach the opening of the intake port 17a on the cylinder 16 side when the intake valve 19a opens, thereby improving the intake efficiency.

When the engine 14 shown in FIG. 3 is rotating at a low speed, the intake pipe is lengthened so that the pulsation effect can be easily obtained. That is, the movable funnel 27 is translated to its contacting position when the engine 14 is rotating at a low speed.

Specifically, first of all, as shown in FIG. 12, the rotary lever 47 is rotationally moved in E direction by the motor 46 of the funnel moving mechanism 29 to move the movable member 48 in F direction. This moves the movable shaft 49 in F direction, which in turn rotationally moves the parallel link 42 (see FIG. 13) in B direction. After that, the parallel link 42 is kept rotationally moving in B direction until the stopper 44d of the lower link lever 44 comes into contact with the support column 26e as shown in FIG. 13.

This causes the movable funnel 27 to be moved to the contacting position with the opening end of the opening 27a of the movable funnel 27 kept in parallel to the opening end of the opening 26a of the fixed funnel 26. As a result, when the engine 14 (see FIG. 3) is rotating at a low speed, the intake pipe is made up of the movable funnel 27, the fixed funnel 26, the throttle body 18 (see FIG. 3) and the intake port 17a (see FIG. 3) and hence can be lengthened. Here, when the intake pipe is lengthened when the engine 14 shown in FIG. 3 is rotating at a low speed, high-pressure pulses can easily reach the opening of the intake port 17a on the cylinder 16 side when the intake valve 19a opens, thereby improving the intake efficiency.

In the first embodiment, as described above, a seal member 35 is provided between the fixed funnel 26 and the movable funnel 27. Thus, air leakage through the gap between the movable funnel 27 and the fixed funnel 26 can be restricted when the movable funnel 27 is moved to the fixed funnel 26 side (in the contacting position). With this construction, a desired amount of air can be supplied to the intake port 17a. In addition, the movable funnel 27 is formed with projections 27f and a projection 27g, and the seal member 35 is formed with engagement holes 35a and a recess 35b for engagement with the projections 27f and 27g, respectively, to prevent the seal member 35 from falling off from the movable funnel 27. Thus, the seal member 35 can be prevented from falling off from the movable funnel 27 without providing a separate member specifically for that purpose. With this construction, it is possible to prevent the seal member 35 and the member for preventing the seal member 35 from falling off from the movable funnel 27 from entering the inside of the engine 14, thereby preventing damage to the engine 14.

In the first embodiment, the movable funnel 27 is formed with a flange-like projection 27g. Therefore, the projection 27g and the recess 35b can be tightly engaged with each other by inserting the projection 27g into the recess 35b. Thus, the seal member 35 can be more reliably prevented from falling off from the movable funnel 27.

In the first embodiment, the movable funnel 27 is formed with four cylindrical (boss-like) projections 27f, and the seal member 35 is formed with four engagement holes 35a for receiving the projections 27f therein. Therefore, the projections 27f and the engagement holes 35a can be tightly engaged with each other by inserting the projections 27f into the engagement holes 35a. Thus, the seal member 35 can be more reliably prevented from falling off from the movable funnel 27.

In the first embodiment, the boss-like projections 27f of the movable funnel 27 are formed to extend at a predetermined angle (approximately 45°) with respect to a radial direction of the seal member 35 (R direction indicated by the arrow), and the engagement holes 35a of the seal member 35 are also formed to extend at a predetermined angle (α° = approximately 45°) with respect to the radial direction of the seal member 35 (R direction indicated by the arrow) correspondingly to the projections 27f. Thus, even when the seal member 35 expands radially, the expanding direction of the seal member 35 is at the predetermined angle (α° = approximately 45°) with respect to the extending direction of the projections 27f and the engagement holes 35a, and hence the projections 27f can be more reliably prevented from coming off out of the engagement holes 35a. In addition, since the projections 27f are formed to extend in a direction at the predetermined angle (approximately 45°) with respect to the radial direction of the sea! member 35 (R direction indicated by the arrow), enlargement of the projections 27f in radial directions of the seal member 35 can be restricted while the area of engagement between the projections 27f and the engagement holes 35a can be increased.

In the first embodiment, since the engagement holes 35a are formed as through holes, it is easy to check whether or not the projections 27f are inserted into the engagement holes 35a with a look from outside.

In the first embodiment, two movable funnels 27 are integrated together, and the boss-like projections 27f are formed to extend in a direction perpendicular to a direction in which the two movable funnels 27 are disposed adjacently. Thus, in the case where the two movable funnels 27 are integrally molded using a split mold, since the split line of the mold extends perpendicularly to the direction in which the two movable funnels 27 are disposed adjacently, the split line of the mold extends in the same direction as the extending direction of the projections 27f. With this construction, the projections 27f can be easily formed in a cylindrical shape (boss-like shape).

In the first embodiment, the seal member 35, which is secured to the movable funnel 27, can smooth the passage of air to be supplied to the fixed funnel 26 when the movable funnel 27 is spaced apart from the fixed funnel 26 (when the engine 14 is rotating at a high speed). Thus, air can be smoothly supplied to the engine 14. With this construction, a decrease in engine 14 output can be restricted.

In the first embodiment, the seal member 35 is formed with a first seal portion 35c formed to extend in radial directions of the seal member 35, and a tubular second seal portion 35d extending in the axial direction of the seal member 35. Thus, air leakage through the gap between the movable funnel 27 and the fixed funnel 26 can be restricted when the movable funnel 27 is moved to the fixed funnel 26 side (in the contacting position).

### (Second Embodiment)

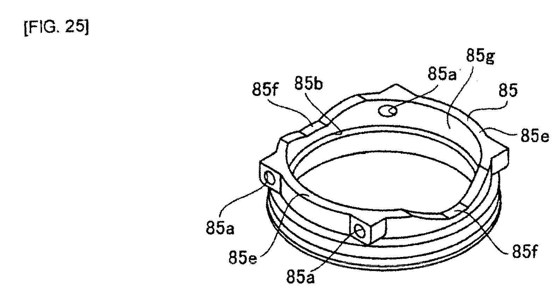

FIGs. 25 to 29 illustrate the detailed structure of a seal member and a movable funnel of a motorcycle according to a second embodiment. As will be described with reference to FIGs. 25 to 29, the second embodiment is different from the first embodiment described above in that the seal part is formed with a thin portion.

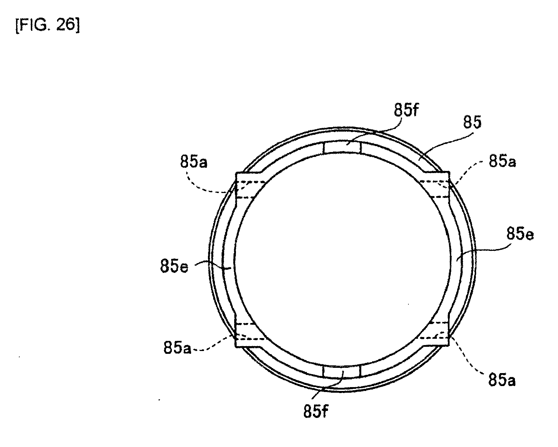

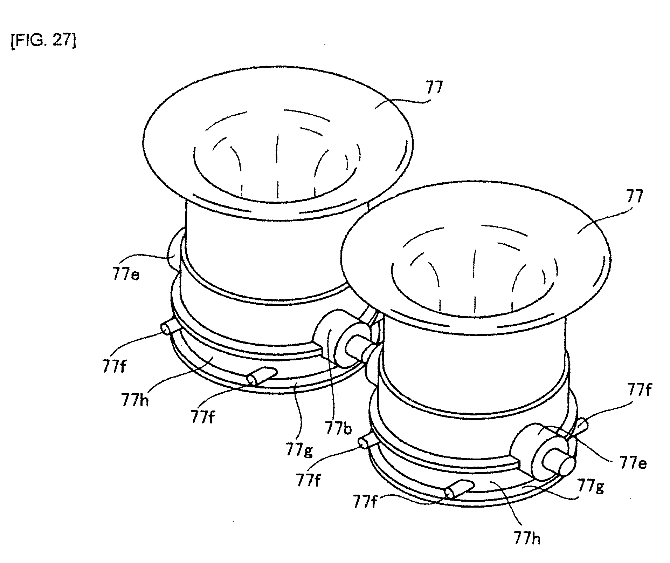

In the second embodiment, as in the first embodiment, a rubber seal member 85 (see FIG. 25) is mounted (secured) at the lower end of the movable funnel 77 (see FIG. 27). As shown in FIGs. 25 and 26, the seal member 85 is formed with four engagement holes 85a as through holes, as in the first embodiment. Four cylindrical projections 77f (see FIG. 27) of the movable funnel 77 are in engagement with the engagement holes 85a. The engagement hole 85a is an example of the "second engagement portion" and the "second recess" of the present teaching. The projection 77f is an example of the "first engagement portion" and the "second projection" of the present teaching.

As shown in FIG. 25, the seal member 85 is formed with a recess 85b on its inner peripheral surface, as in the first embodiment. A flange-like projection 77g (see FIG. 27) formed at the bottom of the movable funnel 77 is in engagement with the recess 85b. The recess 85b is an example of the "second engagement portion" and the "first recess" of the present teaching. The projection 77g is an example of the "first engagement portion" and the "first projection" of the present teaching.

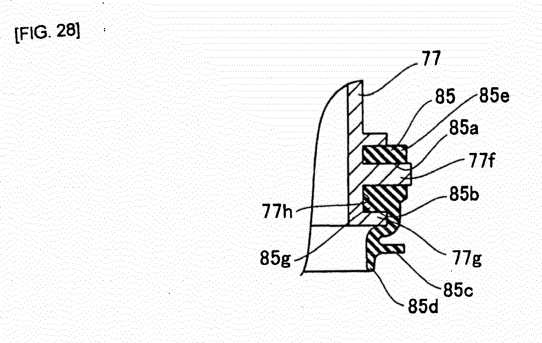

As shown in FIG. 28, the seal member 85 is formed with a first seal portion 85c extending laterally (radially) and a tubular second seal portion 85d extending downward (axially).

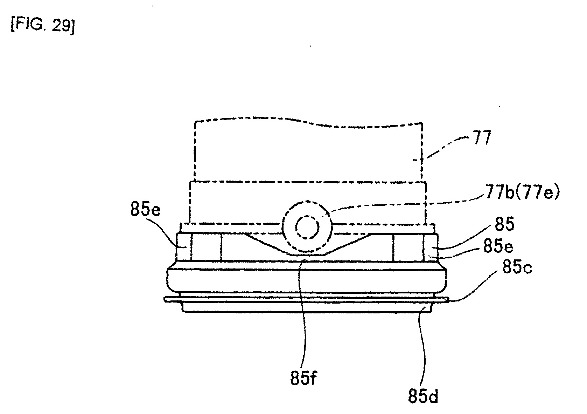

Here, in the second embodiment, as shown in FIG. 25, the seal member 85 is formed with a thick portion 85e and a recessed thin portion 85f axially thinner than the thick portion 85e. As shown in FIG. 29, a lower part of the support shafts 77b and 77e of the movable funnel 77 is disposed in the recessed part of the thin portion 85f. The support shaft 77b is an example of the "shaft part" of the present teaching.

In the second embodiment, as shown in FIGs. 27 and 28, the movable funnel 77 is formed with a recess 77h. As shown in FIG. 28, the seal member 85 is formed with a projection 85g for engagement with the recess 77h. With this construction, the seal member 85 can be more reliably prevented from coming off from the movable funnel 77.

The structure of the other part of the second embodiment is similar to that of the first embodiment.

In the second embodiment, as described above, since the seal member 85 is formed with a thin portion 85f axially thinner than the thick portion 85e, the seal member 35 can be easily stretched at the thin portion 85f. Thus, the seal member 35 can be easily attached to the movable funnel 77.

Other effects of the second embodiment are similar to those of the first embodiment.

The embodiment disclosed herein is intended to be illustrative in all respects, rather than restrictive.

For example, although, the present teaching is applied to a motorcycle in the first and second embodiments described above, it is not limited thereto and may also be applied to vehicles other than motorcycles.

In the first and second embodiments described above, the seal member is secured to the movable funnel. However, the present teaching is not limited thereto, and the seal member may be secured to the fixed funnel.

In the first and second embodiments described above, the movable funnel is formed with four boss-like (cylindrical) projections for securement of the seal member to the movable funnel. However, the present teaching is not limited thereto, and the movable funnels may be formed with three or less, or five or more projections for that purpose.

In the first and second embodiments described above, the seal member is provided with a first seal portion and a second seal portion. However, the present teaching is not limited thereto, and the seal member may be formed with a single seal portion.

In the first and second embodiments described above, the present teaching is applied to a vehicle incorporating a four-cylinder engine. However, the present teaching is not limited thereto and may also be applied to vehicles incorporating a multi-cylinder engine other than a four-cylinder one, vehicles incorporating a single-cylinder engine, and so forth.

In the first and second embodiments described above, two movable funnels are integrated together. However, the present teaching is not limited thereto, and three or more movable funnels may be integrated together. Alternatively, a separate movable funnel may be provided for each cylinder.

In the first and second embodiments described above, the boss-like projections of the movable funnel are formed to extend at approximately 45° with respect to a radial direction of the seal member, and the engagement holes of the seal member are also formed to extend at approximately 45° with respect to the radial direction of the seal member. However, the present teaching is not limited thereto, and the boss-like projections of the movable funnel may be formed to extend in a radial direction of the seal member, and the engagement holes of the seal member may also be formed to extend in the radial direction of the seal member. Alternatively, the boss-like projections of the movable funnel may extend at an angle other than approximately 45° with respect to a radial direction of the seal member, and the engagement holes of the seal member may also be formed to extend at the angle other than approximately 45° with respect to the radial direction of the seal member. In this case, the boss-like projections of the movable funnel can be sufficiently prevented from coming off out of the engagement holes of the seal member, if the projections are formed to extend at approximately 30° to 60° with respect to a radial direction of the seal member and the engagement holes of the seal member are also formed to extend at approximately 30° to 60° with respect to the radial direction of the seal member.

In the first and second embodiments described above, the movable funnel is translatable using a parallel link. However, the present teaching is not limited thereto, and the movable funnel may be not provided with a parallel link and hence not translatable.

In the above embodiment, a fuel injection part 28a of the injector 28 is disposed so as to be in an air passageway 27a of the movable funnel 27 when the movable funnel 27 is spaced apart from the fixed funnel 26 (as shown in FIGs. 9 and 10), and is disposed so as to be above the movable funnel 27 when the movable funnel 27 is in contact with the fixed funnel 26 (as shown in FIGs. 12 and 13).

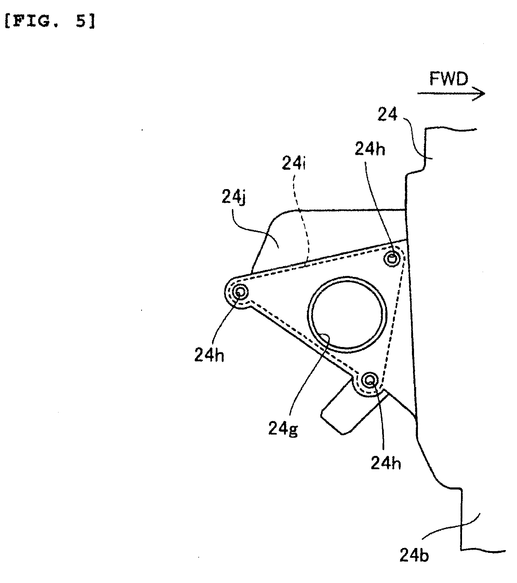

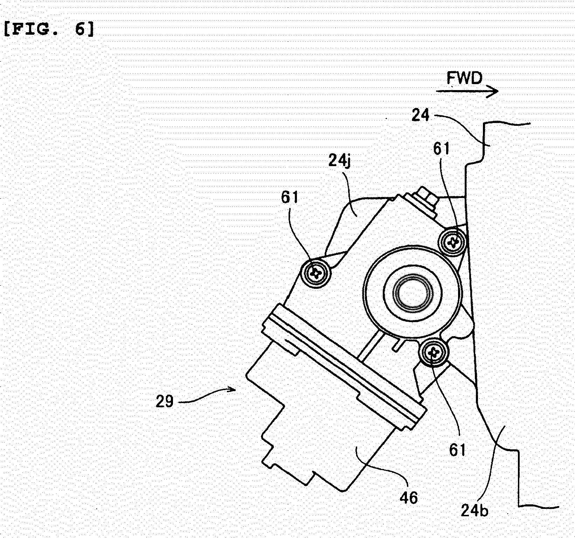

As shown in FIG. 5, a projection 24j is formed at a rear part of the cleaner box 24. The projection 24j is formed together with a plate 24i having an opening 24g and three screw holes 24h by insert molding. As shown in FIG. 6, a funnel moving mechanism 29 is screwed to the screw holes 24j of the cleaner box 24 from outside.

As discussed above, in the embodiment, as shown in FIGs. 14 and 19, two adjacent movable funnels 27 are integrated together via a pair of support shafts 27c (see FIG. 19). That is, this embodiment includes two parts 33, each integrating two adjacent movable funnels 27 together. The support shaft 27c is disposed between the two movable funnels 27 of the part 33. The support shaft 27c is supported by a parallel link 42 to be described later so that the movable funnels 27 (part 33) are translatable. With this structure, two movable funnels 27 can be translatably supported by one parallel link 42. Thus, the number of parallel links 42 can be reduced compared to the case where a parallel link 42 is provided for each movable funnel 27. As shown in FIG. 19, the support shaft 27c has a small diameter portion 27d formed with ribs 27e and 27f. As shown in FIGs. 20 and 21, the rib 27e is formed on the outer surface of the small diameter portion 27d to extend in the axial direction of the support shaft 27c (A direction), and the ribs 27f are formed at both ends of the small diameter portion 27d to extend in a radial direction of the support shaft 27c (B direction).

As shown in FIG. 19, a support shaft 27h having a small diameter portion 27g is provided on outer sides of the part 33 integrating two adjacent movable funnels 27 together. The small diameter portion 27g of the support shaft 27h is formed with ribs 27i and 27j. The ribs 27i and 27j are similar in shape to the ribs 27e and 27f shown in FIGs. 20 and 21, respectively. That is, the rib 27i is formed on the outer surface of the small diameter portion 27g to extend in the axial direction of the support shaft 27h, and the rib 27j is formed at an end of the small diameter portion 27g on the movable funnel 27 side to extend in a radial direction of the support shaft 27h. As shown in FIG. 14, the two parts 33, each integrating two movable funnels 27 together, are disposed such that their respective end surfaces of the small diameter portions 27g of the support shafts 27h are opposed to each other.

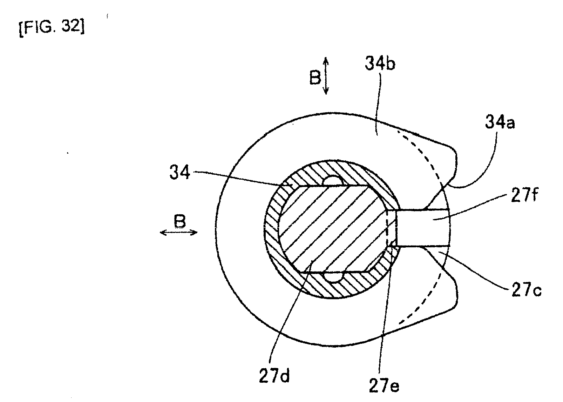

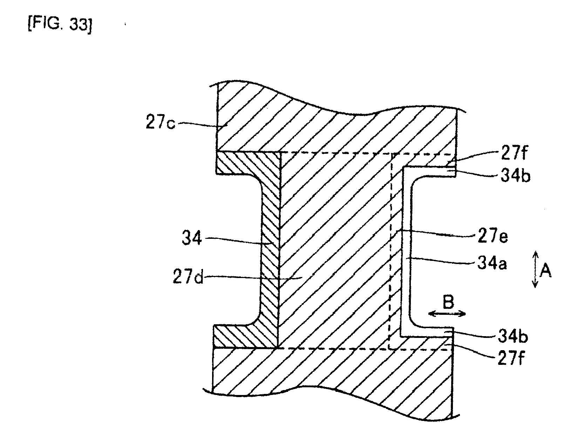

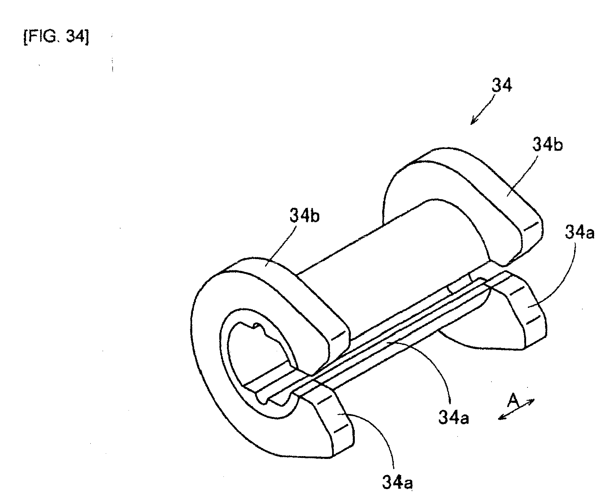

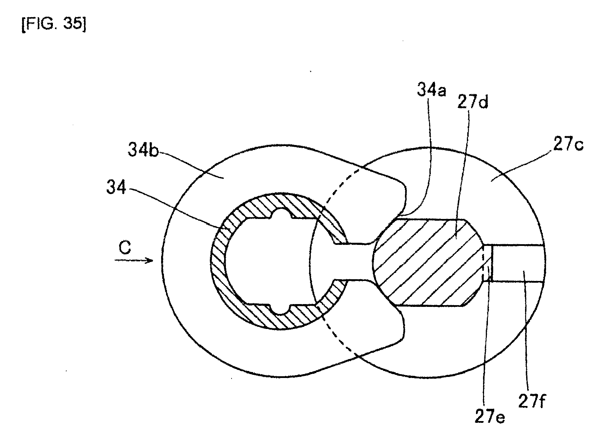

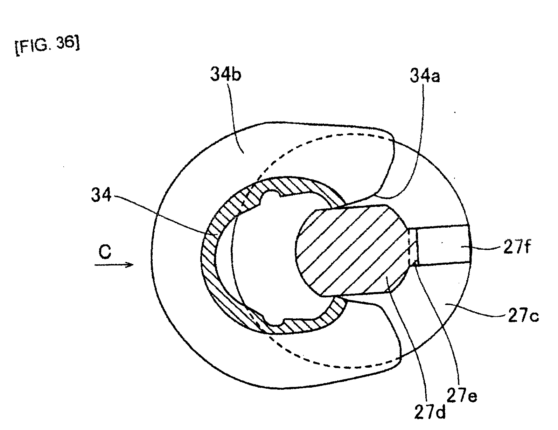

In this embodiment, as shown in FIGs. 32 and 33, a split bushing 34 is mounted on the small diameter portion 27d of the support shaft 27c of the movable funnels 27 (part 33). The split bushing 34 has a function of allowing rotational movement of the parallel link 42 to be described later relative to the support shaft 27c. As shown in FIGs. 32 to 34, the split bushing 34 has a split portion 34a extending in the axial direction of the support shaft 27c (see FIGs. 32 and 34) (A direction). The split bushing 34 is elastically deformable so that the split width of the split portion 34a can be made larger. A flange 34b is provided at both ends of the split bushing 34 that projects in a radial direction of the support shaft 27c (B direction). The flange 34b is integrally provided with a split portion 34a. The split portion 34a in the flange 34b is shaped such that its split width becomes gradually larger along the projecting direction of the flange 34b. With the split bushing 34 constructed as described above, the flange 34b of the split bushing 34 is held in contact with the small diameter portion 27d of the support shaft 27c (as shown in FIG. 35), and then pushed in C direction to obtain the state shown in FIG. 36, where the split portion 34a of the split bushing 34 catches the small diameter portion 27d of the support shaft 27c therein. Then, by further pushing the split bushing 34 in C direction from the state of FIG. 36, the split bushing 34 can be mounted on the small diameter portion 27d of the support shaft 27c as shown in FIG. 32.

As shown in FIGs. 32 and 33, when the split bushing 34 is mounted on the small diameter portion 27d of the support shaft 27c, the split portion 34a of the split bushing 34 is in engagement with the rib 27e of the support shaft 27c by catching the rib 27e therein and the split portion 34a in the flange 34b is in engagement with the rib 27f of the support shaft 27c by catching the rib 27f therein.

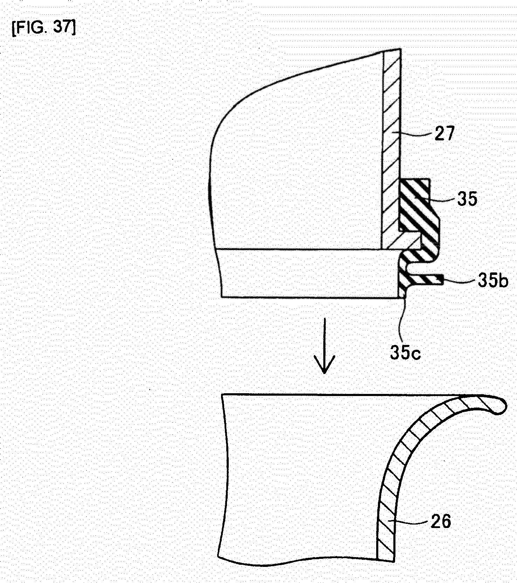

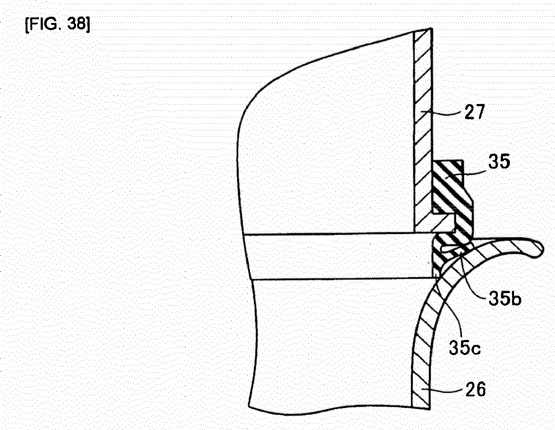

As shown in FIG. 37, the seal member 35 is formed with a first seal portion 35b extending laterally and a second seal portion 35c extending downward. When the movable funnel 27 translates from the spaced position (shown in FIG. 37) to the contacting position (shown in FIG. 38), the first seal portion 35b comes into contact with the fixed funnel 26 to block the gap between the movable funnel 27 and the fixed funnel 26. Also, the first seal portion 35b is elastically deformed upward so that the second seal portion 35c also comes into contact with the fixed funnel 26 to block the gap between the movable funnel 27 and the fixed funnel 26. That is, the seal member 35 has a double seal structure.

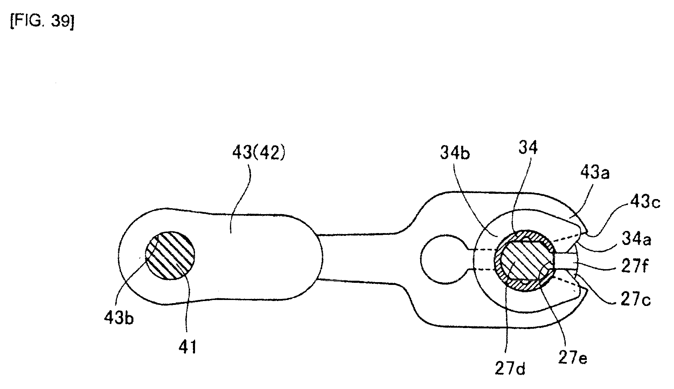

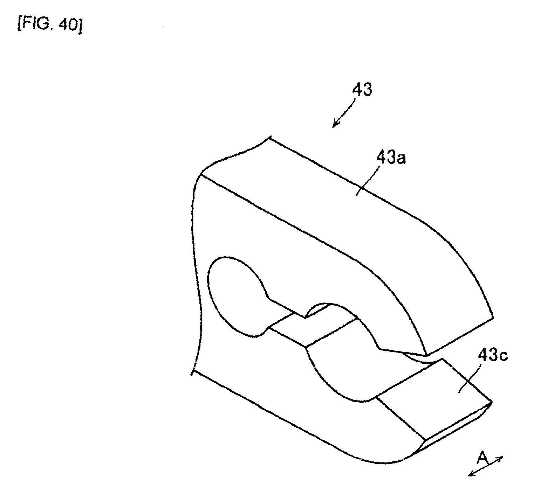

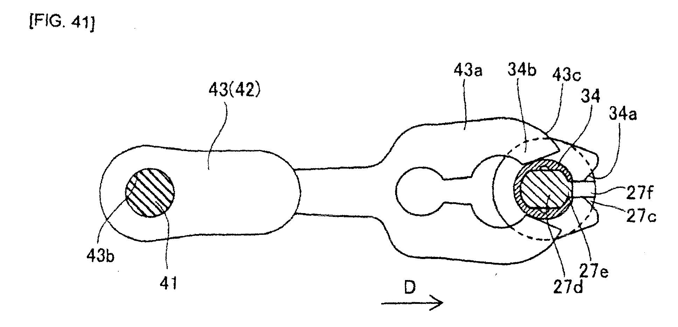

As shown in FIG. 39, the upper link lever 43 has a fitting part 43a and a rotary shaft insertion hole 43b. As shown in FIGs. 8 and 10, the fitting part 43a of the upper link lever 43 receives the upper support shaft 27c (small diameter portion 27d) of the movable funnel 27 via the split bushing 34. With this construction, the upper link lever 43 is rotationally movable relative to the upper support shaft 27c. As shown in FIGs. 39 and 40, the fitting part 43a has a split portion 43c extending in the axial direction of the support shaft 27c (A direction). The fitting part 43a is elastically deformable so that the split width of the split portion 43c can be made larger. With the fitting part 43a constructed as described above, the split portion 43c of the fitting part 43a is pushed against the split bushing 34 (support shaft 27c) in D direction to obtain the state shown in FIG. 41, where the split portion 43c of the fitting part 43a catches the split bushing 34 (support shaft 27c) therein. Then, by further pushing the fitting part 43a in D direction from the state shown in FIG. 41, the fitting part 43a can be fitted on the split bushing 34 (support shaft 27c) as shown in FIG. 39.

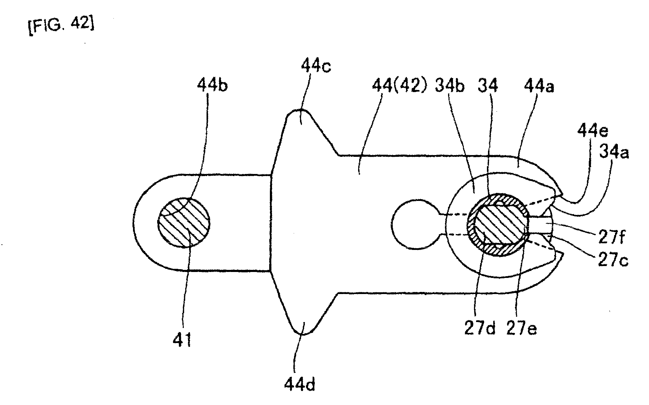

As shown in FIG. 42, the lower link lever 44 has a fitting part 44a, a rotary shaft insertion hole 44b and two stoppers 44c and 44d. The fitting part 44a of the lower link lever 44 receives the lower support shaft 27c (small diameter portion 27d) of the movable funnel 27 via the split bushing 34. With this construction, the lower link lever 44 is rotationally movable relative to the lower support shaft 27c. The fitting part 44a has a split portion 44e extending in the axial direction of the support shaft 27c. The fitting part 44a is elastically deformable so that the split width of the split portion 44e can be made larger. The split portion 44e has a function similar to that of the split portion 43c of the upper link lever 43 described above. The lower rotary shaft 41 is inserted into the rotary shaft insertion hole 44b of the lower link lever 44 so that the lower link lever 44 rotates together with the lower rotary shaft 41. As shown in FIG. 10, the stopper 44c of the lower link lever 44 has a function of regulating rotational movement of the lower link lever 44 in E direction by coming into contact with the support column 26e of the fixed funnel 26 when the lower link lever 44 has moved rotationally by a predetermined amount in E direction (when the movable funnel 27 has reached the spaced position). Also, as shown in FIG. 13, the stopper 44d of the lower link lever 44 has a function of regulating rotational movement of the lower link lever 44 in F direction by coming into contact with the support column 26e of the fixed funnel 26 when the lower link lever 44 has moved rotationally by a predetermined amount in F direction (when the movable funnel 27 has reached the contacting position).

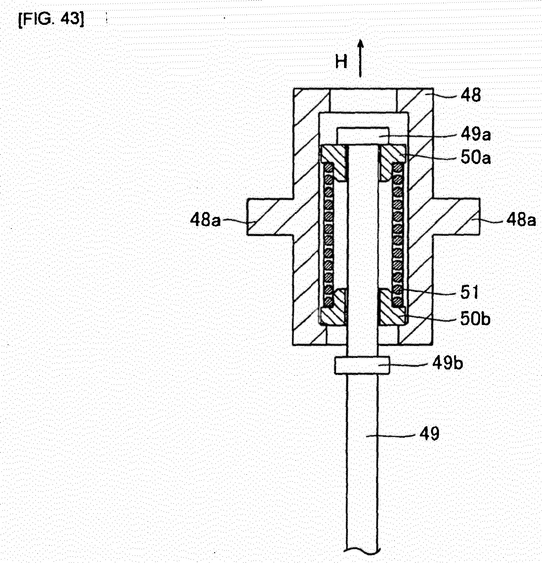

As shown in FIG. 3, the rotary lever 47 is disposed inside the cleaner box 24 (projection 24j) via the opening 24g of the projection 24j of the cleaner box 24. As shown in FIG. 9, a projection 48a provided on both sides of a movable member 48 is attached to the insertion hole 47a of the rotary lever 47 so as to be pivotable relative to the insertion hole 47a. As shown in FIG. 43, one end of a movable shaft 49 is disposed inside the movable member 48. In this embodiment, only one movable shaft 49 is provided. The movable shaft 49 is an example of the "transmission shaft" of the present teaching.

In this embodiment, as shown in FIG. 14, the movable shaft 49 is disposed between the two parts 33 (movable funnels 27). As shown in FIG. 43, the movable shaft 49 is provided with an upper pressing part 49a and a lower pressing part 49b at a predetermined interval. Bushes 50a and 50b are provided inside the movable member 48 for supporting the movable shaft 49 slidably. The bushinges 50a and 50b are disposed between the upper pressing part 49a and the lower pressing part 49b. A compression spring 51 is mounted inside the movable member 48 between the bushinges 50a and 50b. As shown in FIG. 9, a support shaft 52 is provided at the other end of the movable shaft 49. The cutout 45a of the support part 45, which moves rotationally together with the rotary shaft 41, is in engagement with the support shaft 52.

When the rotary lever 47 is rotationally moved in G direction (as shown in FIG. 9) by the driving force of the motor 46, as shown in FIG. 43, the movable member 48 moves in H direction to produce urging force in H direction in the compression spring 51, which in turn urges the movable shaft 49 in H direction. Thus, as shown in FIG. 9, the urging force of the compression spring 51 (see FIG. 43) is transmitted via the movable shaft 49, the support part 45 and the rotary shaft 41 to the parallel link 42 (see FIG. 10), which in turn moves rotationally in E direction. Also, as shown in FIG. 10, when the stopper 44c of the parallel link 42 is in contact with the support column 26e, the urging force of the compression spring 51 (see FIG. 43) is transmitted via the movable shaft 49 to the parallel link 42 so that the parallel link 42 rotationally moves in E direction. With this construction, when the lower link lever 44 rotationally moves in E direction and the stopper 44c has come into contact with the support column 26e (when the movable funnel 27 has reached the spaced position), the stopper 44c of the lower link lever 44 can be kept in contact with the support column 26e by the urging force of the compression spring 51. Thus, when the movable funnel 27 is to be kept at the spaced position, displacement of the movable funnel 27 from the spaced position can be restricted.

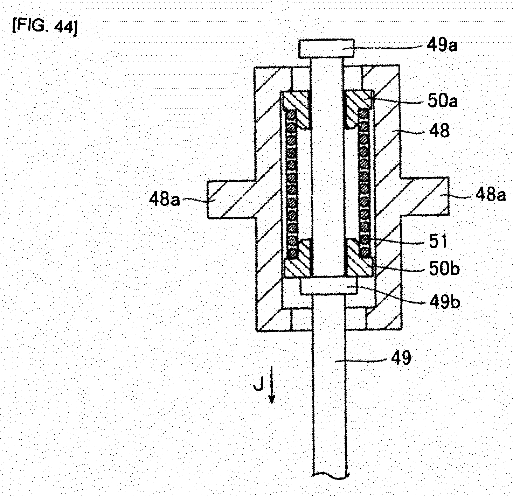

On the other hand, when the rotary lever 47 is rotationally moved in I direction (as shown in FIG. 12) by the driving force of the motor 46, as shown in FIG. 44, the movable member 48 moves in J direction to produce urging force in J direction in the compression spring 51, which in turn urges the movable shaft 49 in J direction. Thus, as shown in FIG. 12, the urging force of the compression spring 51 (see FIG. 44) is transmitted via the movable shaft 49, the support part 45 and the rotary shaft 41 to the parallel link 42 (see FIG. 13), which in turn moves rotationally in F direction. Also, as shown in FIG. 13, when the stopper 44d of the parallel link 42 is in contact with the support column 26e, the urging force of the compression spring 51 (see FIG. 44) is transmitted via the movable shaft 49 to the parallel link 42 so that the parallel link 42 rotationally moves in F direction. With this construction, when the lower link lever 44 rotationally moves in F direction and the stopper 44d has come into contact with the support column 26e (when the movable funnel 27 has reached the contacting position), the stopper 44d of the lower link lever 44 can be kept in contact with the support column 26e by the urging force of the compression spring 51. Thus, when the movable funnel 27 is to be kept at the contacting position, displacement of the movable funnel 27 from the contacting position can be restricted.

Now, with reference to FIGs. 3, 9, 12, 43 and 44, description will be made of how the length of the intake pipe is changed between when the engine 14 is rotating at a high speed and when it is rotating at a low speed.

When the engine 14 shown in FIG. 3 is rotating at a high speed, the intake pipe is shortened so that a pulsation effect can be easily obtained. That is, the movable funnel 27 is translated to its spaced position when the engine 14 is rotating at a high speed. By utilizing the pulsation effect, the intake efficiency can be improved by adjusting the length of the intake pipe such that high-pressure pulses come closer to the vicinity of the intake valve.

Specifically, first of all, as shown in FIG. 9, the rotary lever 47 is rotationally moved in G direction by the motor 46 of the funnel moving mechanism 29 to move the movable member 48 in H direction. In this way, urging force in H direction is generated in the compression spring 51 (see FIG. 43) and moves the movable shaft 49 in H direction, which rotationally moves the parallel link 42 (see FIG. 10) in E direction. After that, the parallel link 42 is kept rotationally moving in E direction until the stopper 44c of the lower link lever 44 comes into contact with the support column 26e as shown in FIG. 10.

This causes the movable funnel 27 to be moved to the spaced position with the opening end of the opening 27b of the movable funnel 27 kept in parallel to the opening end of the opening 26a of the fixed funnel 26. As a result, when the engine 14 (see FIG. 3) is rotating at a high speed, the intake pipe is made up of the fixed funnel 26, the throttle body 18 (see FIG. 3) and the intake port 17a (see FIG. 3) and hence can be shortened. Here, when the intake pipe is shortened when the engine 14 shown in FIG. 3 is rotating at a high speed, high-pressure pulses can easily reach the opening of the intake port 17a on the cylinder 16 side when the intake valve 19a opens, thereby improving the intake efficiency.

The position of the opening end of the movable funnel 27 on the side of the opening 26a of the fixed funnel 26 with the movable funnel 27 in the spaced position as shown in FIG. 9 is the same as that with the movable funnel 27 in the contacting position (as shown in FIG. 12) as viewed in the opening direction of the fixed funnel 26. When the movable funnel 27 is in the spaced position, the urging force of the compression spring 51 (see FIG. 43) is transmitted via the movable shaft 49 to the parallel link 42 so that the parallel link 42 rotationally moves in E direction.

When the movable funnel 27 is in the spaced position, as shown in FIG. 9, the fuel injection part 28a of the injector 28 is disposed in the air passageway 27a of the movable funnel 27. When the engine 14 is rotating at a high speed, not only the injector 20 but also the injector 28 injects fuel.

When the engine 14 shown in FIG. 3 is rotating at a low speed, the intake pipe is lengthened so that the pulsation effect can be easily obtained. That is, the movable funnel 27 is translated to its contacting position when the engine 14 is rotating at a low speed.

Specifically, first of all, as shown in FIG. 12, the rotary lever 47 is rotationally moved in I direction by the motor 46 of the funnel moving mechanism 29 to move the movable member 48 in J direction. In this way, urging force in J direction is generated in the compression spring 51 (see FIG. 44) and moves the movable shaft 49 in J direction, which rotationally moves the parallel link 42 (see FIG. 13) in F direction. After that, the parallel link 42 is kept rotationally moving in F direction until the stopper 44d of the lower link lever 44 comes into contact with the support column 26e as shown in FIG. 13.

This causes the movable funnel 27 to be moved to the contacting position with the opening end of the opening 27b of the movable funnel 27 kept in parallel to the opening end of the opening 26a of the fixed funnel 26. As a result, when the engine 14 (see FIG. 3) is rotating at a high speed, the intake pipe is made up of the movable funnel 27, the fixed funnel 26, the throttle body 18 (see FIG. 3) and the intake port 17a (see FIG. 3) and hence can be lengthened. Here, when the intake pipe is lengthened when the engine 14 shown in FIG. 3 is rotating at a low speed, high-pressure pulses can easily reach the opening of the intake port 17a on the cylinder 16 side when the intake valve 19a opens, thereby improving the intake efficiency.

When the movable funnel 27 is in the contacting position as shown in FIG. 12, the urging force of the compression spring 51 (see FIG. 44) is transmitted via the movable shaft 49 to the parallel link 42 so that the parallel link 42 rotationally moves in F direction.

When the engine 14 is rotating at a low speed, only the injector 20 injects fuel.

In this embodiment, as described above, the rotary shaft 41 and the parallel link 42 are disposed on the front side of the movable funnel 27 in the running direction of the vehicle (FWD direction indicated by the arrow) to movably support the movable funnel 27, and the motor 46 is disposed on the rear side of the movable funnel 27 in the running direction of the vehicle to drive the rotary shaft 41 and the parallel link 42 to move the movable funnel 27. Since the motor 46 is disposed on the opposite side (rear side) of the rotary shaft 41 and the parallel link 42, it is not necessary to secure a space for disposing the motor 46 around the rotary shaft 41 and the parallel link 42. With this construction, the surrounding area of the rotary shaft 41 and the parallel link 42 can be simplified.

In this embodiment, the rotary shaft 41 and the parallel link 42 are disposed inside the cleaner box 24, and the motor 46 is disposed outside the cleaner box 24. Since the motor 46 is not disposed in the way of air to be supplied to the fixed funnel 26 (intake passage), air can be smoothly supplied to the fixed funnel 26.

In this embodiment, the rotary shaft 41 and the parallel link 42 are disposed on the air supply side (front side) of the movable funnel 27. Since the rotary shaft 41 and the parallel link 42 are not disposed on the side opposite to the air supply side (rear side) where air tends to flow, disturbance of air flow by the rotary shaft 41 and the parallel link 42 can be restricted. With this construction, air can be smoothly supplied to the movable funnel 27 and the fixed funnel 26.

In this embodiment, one movable shaft 49 is disposed between the movable funnels 27 to transmit the driving force from the motor 46 to the rotary shaft 41 and the parallel link 42. Since the plurality of movable funnels 27 can be driven by the one movable shaft 49, an increase in number of parts for driving the movable funnels 27 can be restricted. With this construction, enlargement of the surrounding area of the rotary shaft 41 and the parallel link 42 can be restricted.

In this embodiment, by using the parallel link 42 to move the movable funnel 27, the opening 27b of the movable funnel 27 on the fixed funnel 26 side can be spaced apart from and brought into contact with the opening 26a of the fixed funnel 26 on the air supply side with the opening 27b of the movable funnel 27 on the fixed funnel side 26 kept in parallel to the opening end of the fixed funnel 26 on the air supply side. With this construction, even when the opening 27b of the movable funnel 27 on the fixed funnel 26 side is spaced apart from the opening 26a of the fixed funnel 26 on the air supply side, air can flow linearly through the movable funnel 27 into the fixed funnel 26, and hence an increase in air flow resistance can be restricted. As a result, a decrease in air intake efficiency can be restricted when the movable funnel 27 is spaced apart from the fixed funnel 26.

In this embodiment, the injector 20 is disposed below the fixed funnel 26 and the injector 28 is disposed above the movable funnel 27. Since the injector 28 can be disposed away from the intake port 17a, it is possible to extend the time for fuel injected from the injector 28 to be taken (supplied) into the intake port 17a. With this construction, when the engine 14 operates at a high speed and hence the flow rate of air to be taken into the intake port 17a is large, more of the fuel injected from the injector 28 can be atomized and vaporized and then taken into the intake port 17a. As a result, the combustion efficiency can be made more optimal. In addition, the temperature of the air-fuel mixture in the intake pipe can be lowered by the effect of vaporization heat due to the atomization and vaporization of more fuel. Thus, the density of the air-fuel mixture in the intake pipe can be increased. In this way, the amount of the air-fuel mixture to be taken into the intake port 17a can be increased, thereby improving the charging efficiency.

In this embodiment, the fuel injection part 28a of the injector 28 is disposed so as to be in the air passageway 27a of the movable funnel 27 when the movable funnel 27 is spaced apart from the fixed funnel 26. With this construction, fuel injected from the fuel injection part 28a of the injector 28 can be prevented from bubbling over out of the movable funnel 27.

For example, although the present teaching is applied to a motorcycle in the embodiment described above, it is not limited thereto and may also be applied to vehicles other than motorcycles.

In the embodiment described above, the present teaching is applied to a vehicle incorporating a four-cylinder engine. However, the present teaching is not limited thereto and may also be applied to vehicles incorporating a multi-cylinder engine other than a four-cylinder one, vehicles incorporating a single-cylinder engine, and so forth.

In the embodiment described above, the rotary shaft and the parallel link are disposed on the front side of the movable funnel in the running direction of the vehicle, and the motor is disposed on the rear side of the movable funnel in the running direction of the vehicle. However, the present teaching is not limited thereto, and the rotary shaft and the parallel link may be disposed on the rear side of the movable funnel in the running direction of the vehicle, and the motor may be disposed on the front side of the movable funnel in the running direction of the vehicle.

In the embodiment described above, two movable funnels are integrated together. However, the present teaching is not limited thereto, and three or more movable funnels may be integrated together. Alternatively, a separate movable funnel may be provided for each cylinder.

The description above discloses (amongst others) in order to achieve the foregoing object, one embodiment which provides a vehicle including: an engine having an intake port; a fixed funnel for introducing air to the intake port of the engine; a movable funnel movably disposed on an air supply side of the fixed funnel for introducing the air to the intake port of the engine in conjunction with the fixed funnel; a seal member disposed between the fixed funnel and the movable funnel; and an engagement part for engagement of the seal member with either one of the fixed funnel and the movable funnel to prevent the seal member from falling off.

As described above, the vehicle according to the one embodiment is provided with a seal member disposed between the fixed funnel and the movable funnel. Thus, air leakage through the gap between the movable funnel and the fixed funnel can be restricted when the movable funnel is moved to the fixed funnel side. With this construction, a desired amount of air can be supplied to the intake port. In addition, an engagement part for engagement of the seal member with either one of the fixed funnel and the movable funnel is also provided. Thus, the seal member can be prevented from falling off from the fixed funnel or the movable funnel. With this construction, it is possible to prevent the seal member from falling off from the fixed funnel or the movable funnel and entering the inside of the engine, thereby preventing damage to the engine.

In the vehicle according to the one embodiment, preferably, the engagement part includes: a first engagement portion formed in the either one of the fixed funnel and the movable funnel; and a second engagement portion formed in the seal member for engagement with the first engagement portion to prevent the seal member from falling off from the either one of the fixed funnel and the movable funnel. With this construction, it is not necessary to provide a separate member for preventing the seal member from falling off from the fixed funnel or the movable funnel, and accordingly the number of parts can be reduced.

In the vehicle in which the engagement part includes a first engagement portion and a second engagement portion, preferably, the first engagement portion of the either one of the fixed funnel and the movable funnel includes a projection; and the second engagement portion of the seal member includes a recess for engagement with the projection. With this construction, the first engagement portion and the second engagement portion can be easily engaged with each other, and hence the seal member can be easily prevented from falling off from the either one of the fixed funnel and the movable funnel.

In the vehicle in which the engagement part includes a first engagement portion and a second engagement portion, preferably, the first engagement portion of the either one of the fixed funnel and the movable funnel includes a recess; and the second engagement portion of the seal member includes a projection for engagement with the recess. With this construction, the first engagement portion and the second engagement portion can be easily engaged with each other, and hence the seal member can be easily prevented from falling off from the either one of the fixed funnel and the movable funnel.

In the vehicle in which the engagement part includes a first engagement portion and a second engagement portion, the first engagement portion is preferably formed in the movable funnel. With this construction, the first engagement portion is not formed in the fixed funnel, and hence the surface of the fixed funnel can be formed to be smooth. Thus, the passage of air to be supplied to the fixed funnel can be made smooth when the movable funnel is spaced apart from the fixed funnel (when the engine is rotating at a high speed). As a result, air can be smoothly supplied to the engine, thereby restricting a decrease in engine output.

In the vehicle in which the first engagement portion includes a projection and the second engagement portion includes a recess, preferably, the first engagement portion includes a flange-like first projection formed on a side surface of the movable flange; and the second engagement portion includes a first recess for receiving the first projection. With this construction, the first engagement portion and the second engagement portion can be tightly engaged with each other by inserting the first projection of the first engagement portion into the first recess of the second engagement portion. Thus, the seal member can be more reliably prevented from falling off from the movable funnel.

In the vehicle in which the first engagement portion includes a projection and the second engagement portion includes a recess, preferably, the first engagement portion includes a boss-like second projection formed on a side surface of the movable flange; and the second engagement portion includes a second recess for receiving the second projection. With this construction, the first engagement portion and the second engagement portion can be tightly engaged with each other by inserting the second projection of the first engagement portion into the second recess of the second engagement portion. Thus, the seal member can be more reliably prevented from falling off from the movable funnel.

In the vehicle in which the first engagement portion includes a second projection and the second engagement portion includes a second recess, preferably, the fixed funnel, the movable funnel and the seal member are formed to be cylindrical in shape; the second recess is formed to extend at a predetermined angle with respect to a radial direction of the seal member; and the boss-like second projection is formed to extend in a direction corresponding to the extending direction of the second recess. With this construction, even when the seal member expands radially, the expanding direction of the seal member is at the predetermined angle with respect to the extending direction of the second projection and the second recess, and hence the second projection can be prevented from coming off out of the second recess. In addition, since the second projection is formed to extend in a direction at the predetermined angle with respect to the radial direction of the seal member, enlargement of the second projection in the radial direction of the seal member can be restricted while the area of engagement between the second projection and the second recess can be increased.

In the vehicle in which the first engagement portion includes a second projection and the second engagement portion includes a second recess, the second recess is preferably a through hole. With this construction, it is easy to check whether or not the second projection is inserted into the second recess with a look from outside.

In the vehicle in which the first engagement portion includes a second projection and the second engagement portion includes a second recess, preferably, the engine has a plurality of intake ports; each of the intake ports is provided with the fixed funnel and the movable funnel; a plurality of the movable funnels are formed integrally; and the boss-like second projection is formed to extend in a direction perpendicular to a direction in which the plurality of the movable funnels are disposed adjacently. With this construction, in the case where the plurality of the movable funnels are integrally molded using a split mold, the split line of the mold extends perpendicularly to the direction in which the plurality of the movable funnels are disposed adjacently. This allows the split line of the mold to extend in the same direction as the extending direction of the second projection. Thus, the second projection can be easily formed to extend in a boss-like shape.

In the vehicle according to the one embodiment, the seal member is preferably secured to either one of the fixed funnel and the movable funnel. With this construction, the seal member can be easily prevented from falling off from the fixed funnel or the movable funnel.

In the vehicle according to the one embodiment, preferably, the seal member is elastically deformable and includes a thick portion and a thin portion axially thinner than the thick portion. With this construction, the seal member can be easily stretched at the thin portion. Thus, the seal member can be easily attached to either the fixed funnel or the movable funnel.

In the vehicle in which the first engagement portion includes a projection and the second engagement portion includes a recess, preferably, the seal member is elastically deformable and includes a thick portion and a thin portion axially thinner than the thick portion; and the second recess is formed in the thick portion. With this construction, the second recess can be easily formed in the seal member.

In the vehicle in which a plurality of the movable funnels are formed integrally, preferably, the plurality of the movable funnels are formed integrally via a shaft part; the seal member is elastically deformable and includes a thick portion and a thin portion axially thinner than the thick portion; the thin portion of the seal member is formed as a recess; and at least a part of the shaft part of the movable funnels is disposed in the recess of the thin portion.

In the vehicle according to the one embodiment, preferably, a seal portion for contact with either one of the fixed funnel and the movable funnel from a different direction is included. With this construction, air leakage through the gap between the movable funnel and the fixed funnel can be restricted when the movable funnel is moved to the fixed funnel side.

In the vehicle in which the seal member includes a seal portion, preferably, the seal portion includes: a first seal portion extending in a direction perpendicular to an axial direction of the seal member; and a second seal portion formed to extend in the axial direction of the seal member. With this construction, the gap between the movable funnel and the fixed funnel can be sealed in two ways, that is, in the axial direction of the seal member and in directions perpendicular to the axial direction.

The description above still further discloses, in order to provide a vehicle having a simplified structure of a link mechanism for moving a movable funnel and the surrounding area of the link mechanism, an embodiment of a vehicle including: an engine having an intake port; a fixed funnel for introducing air to the intake port of the engine; a movable funnel movably disposed on an air supply side of the fixed funnel for introducing the air to the intake port of the engine in conjunction with the fixed funnel; a link mechanism for movably supporting the movable funnel; and a drive source disposed on an opposite side of the link mechanism with respect to the movable funnel for driving the link mechanism to move the movable funnel.

As described above, the vehicle according to this embodiment is provided with a link mechanism for movably supporting the movable funnel, and a drive source disposed on the opposite side of the link mechanism with respect to the movable funnel for driving the link mechanism. Since the drive source for driving the link mechanism is disposed on the opposite side of the link mechanism, it is not necessary to secure a space for disposing the drive source around the link mechanism. With this construction, the surrounding area of the link mechanism can be simplified.

Further, preferably, the link mechanism is disposed on a front or rear side of the movable funnel in a running direction of the vehicle; and the drive source is disposed on an opposite side of the link mechanism with respect to the movable funnel in the running direction of the vehicle. With this construction, the link mechanism and the drive source are not disposed in the vehicle width direction, and hence an increase in vehicle width can be restricted.

Further, preferably, the vehicle includes a casing for housing the fixed funnel and the movable funnel therein; the link mechanism is disposed inside the casing; and the drive source is disposed outside the casing. With this construction, since the drive source is not disposed in the way of air to be supplied to the fixed funnel (intake passage), air can be smoothly supplied to the fixed funnel.

In the vehicle including a casing for housing the fixed funnel and the movable funnel therein, further preferably, the air is taken into the movable funnel from a side thereof; and the link mechanism is disposed on the side of the movable funnel from which the air is taken. With this construction, since the link mechanism is not disposed on the side opposite to the air supply side where air tends to flow, disturbance of air flow by the link mechanism can be restricted. Thus, air can be smoothly supplied to the movable funnel and the fixed funnel. The term "side" as used herein is intended to refer not only to transverse (left and right) directions of the vehicle but also to longitudinal directions and oblique directions between the longitudinal and transverse directions, and hence should be interpreted widely.

In this case, preferably, the air is taken into the movable funnel from a front or rear side thereof in a running direction of the vehicle. With this construction, the air passage (intake passage) is not disposed in the vehicle width direction, and hence an increase in vehicle width can be restricted.

Further preferably, the vehicle is provided with a plurality of movable funnels, and further includes a transmission shaft disposed between the plurality of movable funnels for transmitting driving force from the drive source to the link mechanism. With this construction, since the plurality of movable funnels can be driven by the one transmission shaft, an increase in number of parts for driving the movable funnels can be restricted. Thus, enlargement of the surrounding area of the link mechanism can be restricted.

Further preferably, the link mechanism includes a link lever for supporting the movable funnel movably and a rotary shaft; and the movable funnel is moved by rotation of the link lever about the rotary shaft. With this construction, the movable funnel can be easily spaced apart from and brought into contact with the fixed funnel.

Further preferably, the link mechanism includes a parallel link for translatably supporting the movable funnel. With this construction, by using the parallel link to move the movable funnel, the opening of the movable funnel on the fixed funnel side can be spaced apart from and brought into contact with the opening of the fixed funnel on the air supply side with the opening end of the movable funnel on the fixed funnel side held parallel to the opening end of the fixed funnel on the air supply side. Thus, even when the opening of the movable funnel on the fixed funnel side is spaced apart from the opening of the fixed funnel on the air supply side, air can flow linearly through the movable funnel into the fixed funnel, and hence an increase in air flow resistance can be restricted. As a result, a decrease in air intake efficiency can be restricted when the movable funnel is spaced apart from the fixed funnel.

Further preferably, the vehicle includes: a first fuel injection system disposed below the fixed funnel; and a second fuel injection system disposed above the movable funnel. With this construction, since the second fuel injection system can be disposed away from the intake port, it is possible to extend the time for fuel injected from the second fuel injection system to be taken (supplied) into the intake port. Thus, when the engine operates at a high speed and hence the flow rate of air to be taken into the intake port is large, more of the fuel injected from the second fuel injection system can be atomized and vaporized and then taken into the intake port. As a result, the combustion efficiency can be made more optimal. In addition, the temperature of the air-fuel mixture in the intake passage can be lowered by the effect of vaporization heat due to the atomization and vaporization of more fuel. Thus, the density of the air-fuel mixture in the intake passage can be increased. In this way, the amount of the air-fuel mixture to be taken into the intake port can be increased, thereby improving the charging efficiency.

In this case, preferably, a fuel injection part of the second fuel injection system is disposed so as to be in an air passageway of the movable funnel when the movable funnel is spaced apart from the fixed funnel. With this construction, fuel injected from the fuel injection part of the second fuel injection system can be prevented from bubbling over out of the movable funnel.

Further preferably, the vehicle is provided with a plurality of fixed funnels, and further includes a position regulating member for regulating attachment positions of the plurality of fixed funnels. With this construction, the plurality of fixed funnels can be disposed in the predetermined positions.

In this case, preferably, the vehicle further includes: a cleaner casing for housing the fixed funnels and the movable funnel therein; and a filter attached to the cleaner casing for purifying the air, and the position regulating member functions as a guide when attaching the filter to the cleaner casing. With this construction, the filter can be easily attached to the cleaner casing with the plurality of fixed funnels disposed in the predetermined positions.

Further preferably, the vehicle includes: a cleaner casing for housing the fixed funnel and the movable funnel therein; a filter attached to the cleaner casing for purifying the air; and a guide part that functions as a guide when attaching the filter to the cleaner casing. With this construction, the filter can be easily attached to the cleaner casing.

Further preferably, the vehicle includes a seal member disposed between the fixed funnel and the movable funnel. With this construction, air leakage through the gap between the movable funnel and the fixed funnel can be restricted when the movable funnel is in contact with the fixed funnel.

The description above further discloses, in order to provide a vehicle in which air leakage through the gap between a movable funnel and a fixed funnel can be restricted, an embodiment of a motorcycle (vehicle) which includes an engine 14 having an intake port 17a, a fixed funnel 26 for introducing air to the intake port 17a of the engine 14, a movable funnel 27 disposed movably on the air supply side of the fixed funnel 26 for introducing the air to the intake port 17a of the engine 14 in conjunction with the fixed funnel 26, and a seal member 35 disposed between the fixed funnel 26 and the movable funnel 27. The movable funnel 27 is formed with projections 27f and 27g, and the seal member 35 is formed with an engagement hole 35a and a recess 35b for engagement with the projections 27f and 27g, respectively, to prevent the seal member 35 from falling off from the movable funnel 27.

The description further discloses, according to a preferred first aspect, a vehicle comprising: an engine having an intake port; a fixed funnel for introducing air to the intake port of the engine; a movable funnel movably disposed on an air supply side of the fixed funnel for introducing the air to the intake port of the engine in conjunction with the fixed funnel; a seal member disposed between the fixed funnel and the movable funnel; and an engagement part for engagement of the seal member with either one of the fixed funnel and the movable funnel to prevent the seal member from falling off.

Further, according to a preferred second aspect, the engagement part includes: a first engagement portion formed in the either one of the fixed funnel and the movable funnel; and a second engagement portion formed in the seal member for engagement with the first engagement portion to prevent the seal member from falling off from the either one of the fixed funnel and the movable funnel.

Further, according to a preferred third aspect, the first engagement portion of the either one of the fixed funnel and the movable funnel includes a projection; and the second engagement portion of the seal member includes a recess for engagement with the projection.

Further, according to a preferred fourth aspect, the first engagement portion of the either one of the fixed funnel and the movable funnel includes a recess; and the second engagement portion of the seal member includes a projection for engagement with the recess.

Further, according to a preferred fifth aspect, the first engagement portion is formed in the movable funnel.

Further, according to a preferred sixth aspect, the first engagement portion includes a flange-like first projection formed on a side surface of the movable flange; and the second engagement portion includes a first recess for receiving the first projection.

Further, according to a preferred seventh aspect, the first engagement portion includes a boss-like second projection formed on a side surface of the movable flange; and the second engagement portion includes a second recess for receiving the second projection.

Further, according to a preferred eighth aspect, the fixed funnel, the movable funnel and the seal member are formed to be cylindrical in shape; the second recess is formed to extend at a predetermined angle with respect to a radial direction of the seal member; and the boss-like second projection is formed to extend in a direction corresponding to the extending direction of the second recess.

Further, according to a preferred ninth aspect, the second recess is a through hole.

Further, according to a preferred tenth aspect, the engine has a plurality of intake ports; each of the intake ports is provided with the fixed funnel and the movable funnel; a plurality of the movable funnels are formed integrally; and the boss-like second projection is formed to extend in a direction perpendicular to a direction in which the plurality of the movable funnels are disposed adjacently.

Further, according to a preferred eleventh aspect, the seal member is secured to either one of the fixed funnel and the movable funnel.

Further, according to a preferred twelfth aspect, the seal member is elastically deformable and includes a thick portion and a thin portion axially thinner than the thick portion.

Further, according to a preferred thirteenth aspect, the seal member is elastically deformable and includes a thick portion and a thin portion axially thinner than the thick portion; and the second recess is formed in the thick portion.

Further, according to a preferred fourteenth aspect, the plurality of the movable funnels are formed integrally via a shaft part; the seal member is elastically deformable and includes a thick portion and a thin portion axially thinner than the thick portion; the thin portion of the seal member is formed as a recess; and at least a part of the shaft part of the movable funnels is disposed in the recess of the thin portion.

Further, according to a preferred fifteenth aspect, the seal member includes a seal portion for contact with either one of the fixed funnel and the movable funnel from a different direction.

Further, according to a preferred sixteenth aspect, the seal portion includes: a first seal portion extending in a direction perpendicular to an axial direction of the seal member; and a second seal portion formed to extend in the axial direction of the seal member.

The description further discloses, according to a preferred seventeenth aspect, a vehicle comprising: an engine having an intake port; a fixed funnel for introducing air to the intake port of the engine; a movable funnel movably disposed on an air supply side of the fixed funnel for introducing the air to the intake port of the engine in conjunction with the fixed funnel; a link mechanism for movably supporting the movable funnel; and a drive source disposed on an opposite side of the link mechanism with respect to the movable funnel for driving the link mechanism to move the movable funnel.

Further, according to a preferred eighteenth aspect, there is disclosed a vehicle wherein the link mechanism is disposed on a front or rear side of the movable funnel in a running direction of the vehicle; and the drive source is disposed on an opposite side of the link mechanism with respect to the movable funnel in the running direction of the vehicle.

Further, according to a preferred nineteenth aspect, there is disclosed a vehicle further comprising: a casing for housing the fixed funnel and the movable funnel therein, wherein: the link mechanism is disposed inside the casing; and the drive source is disposed outside the casing.

Further, according to a preferred twentieth aspect, there is disclosed a vehicle in which the air is taken into the movable funnel from a side thereof; and the link mechanism is disposed on the side of the movable funnel from which the air is taken.

Further, according to a preferred twenty-first aspect, there is disclosed a vehicle in which the air is taken into the movable funnel from a front or rear side thereof in a running direction of the vehicle.

Further, according to a preferred twenty-second aspect, there is disclosed a vehicle in which a plurality of movable funnels are provided; and the vehicle further comprises a transmission shaft disposed between the plurality of movable funnels for transmitting driving force from the drive source to the link mechanism

Further, according to a preferred twenty-third aspect, there is disclosed a vehicle in which the link mechanism includes a link lever for supporting the movable funnel movably and a rotary shaft; and the movable funnel is moved by rotation of the link lever about the rotary shaft.

Further, according to a preferred twenty-fourth aspect, there is disclosed a vehicle in which the link mechanism includes a parallel link for translatably supporting the movable funnel.

Further, according to a preferred twenty-fifth aspect, there is disclosed a vehicle further comprising: a first fuel injection system disposed below the fixed funnel; and a second fuel injection system disposed above the movable funnel.

Further, according to a preferred twenty-sixth aspect, there is disclosed a vehicle in which a fuel injection part of the second fuel injection system is disposed so as to be in an air passageway of the movable funnel when the movable funnel is spaced apart from the fixed funnel.

Further, according to a preferred twenty-seventh aspect, there is disclosed a vehicle in which a plurality of fixed funnels are provided; and the vehicle further comprises a position regulating member for regulating attachment positions of the plurality of fixed funnels.

Further, according to a preferred twenty-eighth aspect, there is disclosed a vehicle further comprising: a cleaner casing for housing the fixed funnels and the movable funnel therein; and a filter attached to the cleaner casing for purifying the air, wherein the position regulating member functions as a guide when attaching the filter to the cleaner casing.

Further, according to a preferred twenty-ninth aspect, there is disclosed a vehicle further comprising: a cleaner casing for housing the fixed funnel and the movable funnel therein; a filter attached to the cleaner casing for purifying the air; and a guide part that functions as a guide when attaching the filter to the cleaner casing.

Further, according to a preferred thirtieth aspect, there is disclosed a vehicle further comprising a seal member disposed between the fixed funnel and the movable funnel.

The description further discloses, in order to provide a vehicle having a simplified structure of a link mechanism for moving a movable funnel and the surrounding area of the link mechanism, an embodiment of a motorcycle (vehicle) includes a fixed funnel 26 for introducing air to an intake port 17a of an engine 14, and a movable funnel 27 movably disposed above the fixed funnel 26 for introducing the air to the intake port 17a of the engine 14 in conjunction with the fixed funnel 26. The motorcycle (vehicle) also includes a rotary shaft 41 and a parallel link 42 disposed on the front side of the movable funnel 27 in the running direction of the vehicle for translatably supporting the movable funnel 27, and a motor 46 disposed on the rear side of the movable funnel 27 in the running direction of the vehicle for driving the parallel link 42 to move the movable funnel 27.

## Claims

1. Vehicle comprising:
an engine (14) having an intake port (17a);
a fixed funnel (26) for introducing air to the intake port (17a) of the engine (14);
a movable funnel (27,77) movably disposed on an air supply side of the fixed funnel (26) for introducing the air to the intake port (17a) of the engine (14) in conjunction with the fixed funnel (26);
a seal member (35,85) disposed between the fixed funnel (26) and the movable funnel (27,77);
an engagement part for engagement of the seal member (35,85) with either one of the fixed funnel (26) and the movable funnel (27,77) to prevent the seal member (35,85) from falling off;
wherein the seal member includes a seal portion for contact with either one of the fixed funnel and the movable funnel from a different direction; and
wherein the seal portion includes a first seal portion extending in a direction perpendicular to an axial direction of the seal member, and a second seal portion formed to extend in the axial direction of the seal member.

2. Vehicle according to claim 1, wherein the engagement part includes a first engagement portion (27f,77f,27g,77g) formed in the either one of the fixed funnel (26) and the movable funnel (27,77), and a second engagement portion (35a,85a,35b,85b) formed in the seal member (35,85) for engagement with the first engagement portion to prevent the seal member (35,85) from falling off from the either one of the fixed funnel (26) and the movable funnel (27,77).

3. Vehicle according to claim 2, wherein the first engagement portion of the either one of the fixed funnel (26) and the movable funnel (27,77) includes a projection (27g,77g), and the second engagement portion of the seal member (35,85) includes a recess (35b,85b) for engagement with the projection.

4. Vehicle according to claim 2, wherein the first engagement portion of the either one of the fixed funnel (26) and the movable funnel (27,77) includes a recess, and the second engagement portion of the seal member (35,85) includes a projection for engagement with the recess.

5. Vehicle according to one of the claims 2 to 4, wherein the first engagement portion is formed in the movable funnel (27,77).

6. Vehicle according to claim 5, wherein the first engagement portion includes a flange-like first projection (27g,77g) formed on a side surface of the movable funnel, and the second engagement portion includes a first recess (35b,85b) for receiving the first projection.

7. Vehicle according to claim 5 or 6, wherein the first engagement portion includes a boss-like second projection (27g,77g) formed on a side surface of the movable funnel, and the second engagement portion includes a second recess (35a,85a) for receiving the second projection.

8. Vehicle according to claim 7, wherein the fixed funnel (26), the movable funnel (27,77) and the seal member (35,85) are formed to be cylindrical in shape, the second recess (35a,85a) is formed to extend at a predetermined angle (α) with respect to a radial direction of the seal member (35,85), and the boss-like second projection (27f,77f) is formed to extend in a direction corresponding to the extending direction of the second recess.

9. Vehicle according to claim 7 or 8, wherein the second recess (35a,85a) is a through hole.

10. Vehicle according to claim 8 or 9, wherein the engine (14) has a plurality of intake ports, each of the intake ports is provided with the fixed funnel and the movable funnel, a plurality of the movable funnels are formed integrally, and the boss-like second projection is formed to extend in a direction perpendicular to a direction in which the plurality of the movable funnels are disposed adjacently.

11. Vehicle according to one of the claims 1 to 10, wherein the seal member is secured to either one of the fixed funnel and the movable funnel.

12. Vehicle according to one of the claims 1 to 11, wherein the seal member is elastically deformable and includes a thick portion and a thin portion axially thinner than the thick portion.

13. Vehicle according to claim 12, wherein the second recess is formed in the thick portion of the seal member.

14. Vehicle according to one of the claims 10 to 13, wherein the plurality of the movable funnels are formed integrally via a shaft part, the seal member is elastically deformable and includes a thick portion and a thin portion axially thinner than the thick portion, the thin portion of the seal member is formed as a recess, and at least a part of the shaft part of the movable funnels is disposed in the recess of the thin portion.
